(19)

**Europäisches Patentamt**
**European Patent Office**
**Office européen des brevets**

(11) **EP 4 553 860 A1**

(12) **EUROPEAN PATENT APPLICATION**
published in accordance with Art. 153(4) EPC

(43) Date of publication:
**14.05.2025 Bulletin 2025/20**

(21) Application number: **23835608.3**

(22) Date of filing: **07.07.2023**

(51) International Patent Classification (IPC):
*H01B 13/00* (2006.01)        *C01B 25/14* (2006.01)
*H01M 10/0562* (2010.01)

(52) Cooperative Patent Classification (CPC):
**C01B 25/14; H01B 13/00; H01M 10/0562;**
**Y02E 60/10**

(86) International application number:
**PCT/JP2023/025216**

(87) International publication number:
**WO 2024/010077 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.07.2022 JP 2022109696**
**10.03.2023 JP 2023037187**

(71) Applicant: **Idemitsu Kosan Co.,Ltd.**
**Tokyo 100-8321 (JP)**

(72) Inventors:
• **OKAMOTO, Yuji**
  **Tokyo 100-8321 (JP)**
• **KAKINUMA, Takahiro**
  **Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING SULFIDE SOLID ELECTROLYTE**

(57)    It is a method for producing a sulfide solid electrolyte including mixing, in a solvent, a raw material-containing substance that contains a plurality of raw materials each containing at least one atom selected from a lithium atom, a phosphorus atom, a sulfur atom, and a halogen atom, and subsequently heating the mixture, wherein the raw material-containing substance contains elemental sulfur and lithium sulfide, and the elemental sulfur is used in an amount of more than 1.0 mole based on 1.0 mole of the lithium sulfide.

[Fig. 1]

**Description**

Technical Field

The present invention relates to a method for producing a sulfide solid electrolyte.

Background Art

In recent years, with the rapid spread of information-related devices such as personal computers, video cameras, and mobile phones, and communication devices and the like, the development of batteries used as a power source for the devices has been regarded as important. Conventionally, electrolytic solution containing flammable organic solvents have been used in batteries used for such applications, however by making the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. For example, among the liquid phase methods, as a homogeneous method, a method of dissolving a solid electrolyte in a solvent and re-precipitating the solid electrolyte is known (for example, see PTL 1), and further, as a heterogeneous method, a method of reacting a solid electrolyte raw material such as lithium sulfide in a solvent containing a polar aprotic solvent (for example, see PTLs 2 and 3), and moreover, a method for producing a solid electrolyte using a specific compound having an amino group as a complexing agent (for example, see PTLs 4 and 5) are known. NPL 1 describes a method of preparing a tetrahydrofuran-ethanol precursor solution of $Li_6PS_5Br$ using tetrahydrofuran and ethanol, drying the solution, and heating the solution to produce a solid electrolyte having an argyrodite-type crystal structure having a composition of $Li_6PS_5Br$.

In addition, NPLs 2 and 3 disclose that a crystalline solid electrolyte having a composition of $Li_7P_3S_{11}$ is produced by adding $Li_2S$, $P_2S_5$, and S (in a molar ratio of 7 : 3 : x (x = 3, 5, and 7)) to a mixed solvent of acetonitrile, tetrahydrofuran, and ethanol (volume ratio of 1 : 1 : 0.05) to generate lithium polysulfides and highly reactive sulfur radicals, which are then stirred for several minutes, dried under vacuum, and heated at a heating temperature of 270°C, 350°C, etc.

Citation List

Patent Literature

PTL 1:JP 2014-191899 A
PTL 2:WO 2014/192309 A
PTL 3:WO 2018/054709 A
PTL 4:WO 2020/105737 A
PTL 5:WO 2021/230189 A

Non Patent Literature

NPL 1:J. Mater. Chem. A, 2019, 7, 558-566
NPL 2:The 62nd Battery Symposium in Japan proceedings, published on November 29, 2021, All-solid Battery/-Sulfide Electrolyte, 3E01
NPL 3:Adv. Energy Sustainability Res. 2022, 3, 2200019

Summary of Invention

Technical Problem

The present invention has been made in view of the above circumstances, and has an object to efficiently provide a sulfide solid electrolyte having improved ionic conductivity.

Solution to Problem

A method for producing a sulfide solid electrolyte according to the present invention is

a method for producing a sulfide solid electrolyte including
mixing, in a solvent, a raw material-containing substance that contains a plurality of raw materials each containing at least one atom selected from a lithium atom, a phosphorus atom, a sulfur atom, and a halogen atom, and subsequently heating the mixture, wherein
the raw material-containing substance contains elemental sulfur and lithium sulfide, and
the elemental sulfur is used in an amount of more than 1.0 mole based on 1.0 mole of the lithium sulfide.

Advantageous Effects of Invention

According to the present invention, it is possible to efficiently provide a sulfide solid electrolyte having improved ionic conductivity.

Brief Description of Drawings

Fig. 1 is an X-ray diffraction spectrum of powder obtained in Examples.

Fig. 2 is an X-ray diffraction spectrum of the powder obtained in Examples.

Fig. 3 is an X-ray diffraction spectrum of the powder obtained in Examples.

Fig. 4 is an X-ray diffraction spectrum of the powder obtained in Examples and Comparative Examples.

Fig. 5 is an X-ray diffraction spectrum of the powder obtained in Examples and Comparative Examples.

Fig. 6 is an X-ray diffraction spectrum of the powder obtained in Examples and Comparative Examples.

Fig. 7 is an X-ray diffraction spectrum of the powder obtained in Examples.

Fig. 8 is an X-ray diffraction spectrum of the powder obtained in Examples.

Fig. 9 is an X-ray diffraction spectrum of the powder obtained in Examples.

Fig. 10 is an X-ray diffraction spectrum of the powder obtained in Examples.

Fig. 11 is an X-ray diffraction spectrum of the powder obtained in Examples.

Fig. 12 is an X-ray diffraction spectrum of the powder obtained in Examples.

Fig. 13 is an X-ray diffraction spectrum of the powder obtained in Examples and Comparative Examples.

Fig. 14 is an X-ray diffraction spectrum of the powder obtained in Examples and Comparative Examples.

Fig. 15 is an X-ray diffraction spectrum of the powder obtained in Examples and Comparative Examples.

Fig. 16 is an X-ray diffraction spectrum of the powder obtained in Examples and Comparative Examples.

Fig. 17 is an X-ray diffraction spectrum of the powder obtained in Examples and Comparative Examples.

Fig. 18 is an X-ray diffraction spectrum of the powder obtained in Examples.

Fig. 19 is an X-ray diffraction spectrum of the powder obtained in Examples.

Fig. 20 is an X-ray diffraction spectrum of the powder obtained in Examples.

Fig. 21 is an X-ray diffraction spectrum of the powder obtained in Examples.

Fig. 22 is an X-ray diffraction spectrum of the powder obtained in Examples.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or a plurality of other specifications considered to be preferable. It can be said to be more desirable to combine the preferred ones with each other.

(Findings Obtained by the Inventors to Reach the Present Invention)

As a result of intensive studies to solve the above-described problems, the inventors have found the following matters, and have completed the present invention.

In order to put all-solid batteries into practical use in recent years, a liquid phase method has attracted attention as a method capable of being simply synthesized in a large amount in addition to versatility and applicability. A solid phase method, as typified by a mechanical milling method, includes a method of grinding and mixing solid electrolyte raw materials in a grinder and reacting the raw materials obtain a solid electrolyte. However, the cost of equipment is high and a large initial investment is required, making it difficult to reduce costs.

On the other hand, for the liquid phase method, for example, the method described in PTL 1 involves mechanical milling $Li_2S$ and $P_2S_5$ (80 : 20) for 20 hours, and then dissolving the mixture in N-methylformamide (NMF) and drying to obtain a solid electrolyte, which requires 20 hours of mechanical milling. In the method described in PTL 2, $Li_2S$ and $P_2S_5$ are contacted and reacted in a mixed solvent of a hydrocarbon solvent (toluene) and a polar aprotic solvent (tetrahydrofuran) for 24 hours, and in the method described in PTL 3, stirring is performed for about 10 days when producing $Li_3PS_4 \cdot DME$ (electrolyte precursor; complex) in dimethoxyethane (DME). Further, in the method using a complexing agent described in PTLs 4 and 5, the solid electrolyte raw material is stirred with the complexing agent for 12 to 72 hours or even longer to allow the reaction to proceed, and in the method described in NPL 1, the reaction is allowed to proceed overnight, i.e., for about 12 hours. As described above, the reaction time is long in the conventional production methods, and therefore there is a demand for improved production efficiency.

In addition, in the method described in NPL 1, drying is performed for 3 hours to remove tetrahydrofuran and ethanol. However, some of the remaining ethanol may react with the solid electrolyte to produce oxides as impurities. $Li_2S$, which is widely used as a raw material for solid electrolytes, partially reacts with an alcohol solvent such as ethanol to produce lithium alkoxide such as lithium ethoxide, which does not contribute to reactions with raw materials such as phosphorus sulfide (for example, diphosphorus pentasulfide ($P_2S_5$)) that are widely used together with $Li_2S$. Therefore, the purity of the sulfide solid electrolyte may decrease, and the ionic conductivity may decrease, and there is a demand for improving the quality.

In the methods described in NPLs 2 and 3, a crystalline sulfide solid electrolyte is obtained by stirring for several minutes, drying for one hour, and heating for one hour, and it can be said that the method has excellent production efficiency. However, since the sulfide solid electrolyte does not contain halogen atoms, the ionic conductivity is about 0.9 to 1.3 mS/cm, and it cannot be said that the sulfide solid electrolyte has high ionic conductivity. These non-patent literatures state that the action of ethanol on the lithium of lithium polysulfide generates highly reactive sulfur radicals. Therefore, when a lithium halide containing Li, like $Li_2S$, is used as a raw material, the mechanism for generating sulfur radicals may be inhibited, and it is expected that the reaction may not proceed efficiently.

As described above, the conventional techniques have both advantages and disadvantages, and there is room for improvement in producing a sulfide solid electrolyte having high ionic conductivity with high production efficiency.

Therefore, the inventors focused on elemental sulfur as a raw material. When the use of elemental sulfur as a raw material and the use of a raw material containing a halogen atom to improve ionic conductivity was investigated, it was found that by using an excess of elemental sulfur, a sulfide solid electrolyte with improved ionic conductivity can be obtained in an extremely short period of time.

(Regarding various aspects of the present embodiment)

A method for producing a sulfide solid electrolyte according to a first aspect of the present embodiment is

a method for producing a sulfide solid electrolyte including
mixing, in a solvent, a raw material-containing substance that contains a plurality of raw materials each containing at least one atom selected from a lithium atom, a phosphorus atom, a sulfur atom, and a halogen atom, and subsequently heating the mixture, wherein
the raw material-containing substance contains elemental sulfur and lithium sulfide, and
the elemental sulfur is used in an amount of more than 1.0 mole based on 1.0 mole of the lithium sulfide.

In the method for producing a sulfide solid electrolyte of the present embodiment, it is necessary to use a combination of elemental sulfur and lithium sulfide as raw materials. It is believed that in the solvent, elemental sulfur reacts with lithium sulfide to become lithium polysulfides, and sulfur radicals are generated. Sulfur radicals are highly reactive, and promote reactions with other raw materials, such as diphosphorus pentasulfide and other raw materials containing halogen atoms, to generate soluble polysulfides (hereinafter simply referred to as "polysulfides"), which are precursors of sulfide solid electrolytes (hereinafter also referred to as "electrolyte precursors"). It is believed that by decomposing the polysulfides by heating or the like, a sulfide solid electrolyte with improved ionic conductivity can be efficiently produced.

In addition, the amount of elemental sulfur used is more than 1.0 mole based on 1.0 mole of lithium sulfide, which is an excessive amount. The amount used is, as will be described in detail later, an excessive amount compared to the sulfur atoms required for the sulfide solid electrolyte to be obtained. In this way, the excessive use of elemental sulfur promotes the generation of sulfur radicals, and as a result, a sulfide solid electrolyte with improved ionic conductivity can be efficiently produced.

By mixing the raw material-containing substance, a precursor for generating a sulfide solid electrolyte by further heating, an amorphous sulfide solid electrolyte, and even a crystalline sulfide solid electrolyte can be generated. By mixing, a soluble polysulfide, which is an electrolyte precursor, is generated, and then by heating, the polysulfide is decomposed to become an amorphous sulfide solid electrolyte or a crystalline sulfide solid electrolyte, and the crystallinity of the crystalline sulfide solid electrolyte is improved. The solvent is also removed. Therefore, in the production method of the present embodiment, heating is performed mainly for the decomposition of the polysulfide, removal of the solvent, and crystallization. In addition, although the removal of elemental sulfur generated by the decomposition of the polysulfide can also be performed by evaporation through heating, methods other than heating, such as solvent washing and hydrodesulfurization, may also be applied.

The method for producing a sulfide solid electrolyte according to a second aspect of the present embodiment is a method in which, in the first aspect,
the halogen atom is at least one atom selected from a chlorine atom, a bromine atom, and an iodine atom.

When the sulfide solid electrolyte contains a halogen atom, it has high ionic conductivity. Among these, by containing any one of a chlorine atom, a bromine atom, and an iodine atom, it becomes easy to form an argyrodite type crystal structure or a thio-LISICON Region II type crystal structure, which exhibits particularly high ionic conductivity.

The method for producing a sulfide solid electrolyte according to a third aspect of the present embodiment is a method in which, in the first or second aspect,

the solvent is an organic solvent containing at least one atom selected from an oxygen atom and a nitrogen atom, and the method for producing a sulfide solid electrolyte according to a fourth aspect of the present embodiment is a method in which, in the first to third aspect,
the solvent is at least one organic solvent selected from an alcohol solvent, an ether solvent, and a nitrile solvent.

When a solvent containing a heteroatom is used as the solvent, the generation of sulfur radicals is promoted through the reaction of elemental sulfur with lithium sulfide to form lithium polysulfides. Since sulfur radicals are highly reactive, they act on other raw materials, such as diphosphorus pentasulfide and other raw materials containing halogen atoms, and react with lithium sulfide or lithium polysulfide to promote the generation of soluble polysulfide. The soluble polysulfide is a precursor of a sulfide solid electrolyte, and when heated, the polysulfide is decomposed to quickly become an amorphous sulfide solid electrolyte or a crystalline sulfide solid electrolyte, and the crystallinity of the crystalline sulfide solid electrolyte is improved. As a result, a sulfide solid electrolyte having few impurities and a high ionic conductivity can be efficiently obtained.

In addition, as a solvent containing such a heteroatom, it is preferable to use at least one of an alcohol solvent, an ether solvent, and a nitrile solvent. The use of these solvents promotes the effect of using a solvent containing the heteroatom, namely, the generation of sulfur radicals and the formation of an electrolyte precursor (polysulfide). In addition, the combined use of an alcohol solvent, an ether solvent, and a nitrile solvent promotes the generation of sulfur radicals and the formation of an electrolyte precursor (polysulfide) in a well-balanced manner. As a result, a sulfide solid electrolyte having few impurities and a high ionic conductivity can be efficiently obtained.

The method for producing a sulfide solid electrolyte according to a fifth aspect of the present embodiment is a method in which, in the first to fourth aspects,

the solvent includes an alcohol solvent,
and the method for producing a sulfide solid electrolyte according to a sixth aspect of the present embodiment is a method in which, in the first to fifth aspect,
the solvent includes an alcohol solvent and at least one organic solvent selected from an ether solvent and a nitrile solvent.

Among the solvents containing heteroatoms, the alcohol solvent, the ether solvent, and the nitrile solvent are effective in generating sulfur radicals and forming an electrolyte precursor (polysulfide), and among these solvents, the alcohol solvent is particularly effective in promoting the generation of sulfur radicals and the formation of an electrolyte precursor (polysulfide). By using an alcohol solvent, a sulfide solid electrolyte having few impurities and high ionic conductivity can be produced more efficiently.

In addition, for the alcohol solvent, the ether solvent, and the nitrile solvent, it is also effective to use an alcohol solvent and at least one of an ether solvent and a nitrile solvent. This makes it easier to promote the generation of sulfur radicals and the formation of an electrolyte precursor (polysulfide) in a well-balanced manner.

The method for producing a sulfide solid electrolyte according to a seventh aspect of the present embodiment is a method in which, in the first to sixth aspects,
the solvent is an organic solvent including an alcohol solvent, an ether solvent, and a nitrile solvent.

The method for producing a sulfide solid electrolyte according to an eighth aspect of the present embodiment is a method in which, in the fifth to seventh aspects,

the alcohol solvent is used in an amount of 0.005 mole or more and 20.0 mole or less based on 1.0 mole of the lithium sulfide,
and the method for producing a sulfide solid electrolyte according to a ninth aspect of the present embodiment is a method in which, in the sixth to eighth aspects,
a total amount of the ether solvent and the nitrile solvent used is 2.0 parts by volume or more and 10,000.0 parts by volume or less based on 1.0 part by volume of the alcohol solvent used.

As described above, the use of a solvent containing a heteroatom promotes the generation of sulfur radicals and the formation of an electrolyte precursor (polysulfide), and the use of an alcohol solvent in particular improves the effect of forming the electrolyte precursor (polysulfide). In this case, by setting the amount of the alcohol solvent to the above range, the generation of sulfur radicals and the formation of the electrolyte precursor (polysulfide) are further promoted. Moreover, by setting the total amount of the ether solvent and the nitrile solvent to the above range, the generation of sulfur radicals and the formation of the electrolyte precursor (polysulfide) are further promoted.

The method for producing a sulfide solid electrolyte according to a tenth aspect of the present embodiment is a method in which, in the first to ninth aspects,

a heating temperature in the heating is 20°C or higher and 500°C or lower,
and the method for producing a sulfide solid electrolyte according to an eleventh aspect of the present embodiment is a method in which, in the first to tenth aspects,
the heating is performed by a first heating with a heating temperature of 20°C or higher and lower than 150°C, and a second heating with a heating temperature of 150°C or higher and 500°C or lower.

As described above, in the production method of the present embodiment, heating is performed mainly for the decomposition of the electrolyte precursor (polysulfide), removal of the solvent, and crystallization. When the heating temperature in the heating is within the above range, it is possible to more efficiently and reliably remove the solvent and achieve crystallization.

Furthermore, by performing heating in multiple stages, namely the first heating and the second heating, it is possible to more efficiently perform the decomposition of the polysulfide, the removal of the solvent, and crystallization. Moreover, elemental sulfur produced by decomposition of the polysulfide can also be removed by heating. The removal of elemental sulfur is not limited to heating, and can also be achieved by other methods such as solvent washing and hydrodesulfurization.

The method for producing a sulfide solid electrolyte according to a twelfth aspect of the present embodiment is a method in which, in the first to eleventh aspects,

in the mixing, the raw materials are mixed simultaneously,

and the method for producing a sulfide solid electrolyte according to a thirteenth aspect of the present embodiment is a method in which, in the first to eleventh aspect,

in the mixing, a raw material group 1 including a part of raw materials selected from the raw materials is mixed, and then a raw material group 2 including raw materials other than the part of the raw materials is mixed.

In the production method of the present embodiment, although the order of supplying the raw materials is not particularly limited, from the viewpoint of easier operation, it is preferable to mix all the raw materials at the same time (which may also be referred to as "collective mixing"). In addition, in consideration of obtaining higher solubility and ionic conductivity of the raw materials, it is preferable to separate the raw materials into two groups described later and mix them in sequence (which may also be referred to as "split mixing").

In the production method of the present embodiment, the choice of collective mixing or split mixing may be made appropriately depending on whether the ease of operation or the ionic conductivity is important.

The method for producing a sulfide solid electrolyte according to a fourteenth aspect of the present embodiment is a method in which, in the thirteenth aspects,

the raw material group 1 includes elemental sulfur,

and the method for producing a sulfide solid electrolyte according to a fifteenth aspect of the present embodiment is a method in which, in the thirteenth or fourteenth aspect,

the raw material group 1 includes a raw material containing at least one atom selected from a lithium atom, a phosphorus atom, and a sulfur atom, elemental sulfur, and lithium sulfide, and the raw material group 2 includes a raw material containing a halogen atom.

When mixing the raw materials in two stages, it is preferable that the raw material group 1 includes elemental sulfur, that is, elemental sulfur is mixed first. Since sulfur radicals can be formed first, the sulfide solid electrolyte with improved ionic conductivity can be efficiently produced.

In addition, from the viewpoint of reducing the amount of remaining raw materials and obtaining higher ionic conductivity, it is preferable to allocate a raw material containing at least one atom selected from a lithium atom, a phosphorus atom, and a sulfur atom, and a raw material containing a halogen atom to either the raw material group 1 or 2.

From the viewpoint of efficiently producing a sulfide solid electrolyte with improved ionic conductivity by further promoting the formation of sulfur radicals via lithium polysulfides and the formation of an electrolyte precursor, it is particularly preferable that the raw material group 1 includes a raw material containing at least one atom selected from a lithium atom, a phosphorus atom, and a sulfur atom, elemental sulfur, and lithium sulfide, and that the raw material group 2 includes a raw material containing a halogen atom.

The method for producing a sulfide solid electrolyte according to a sixteenth aspect of the present embodiment is a method in which, in the first to fifteenth aspects,

a crystalline sulfide solid electrolyte having an argyrodite type crystal structure or a thio-LISICON Region II type crystal structure is produced.

In the production method of the present embodiment, it is possible to produce a desired sulfide solid electrolyte by changing the type and blending ratio of the solid electrolyte raw materials contained in the raw material-containing substance. A crystalline sulfide solid electrolyte having an argyrodite type crystal structure and a crystalline sulfide solid electrolyte having a thio-LISICON Region II type crystal structure are known as sulfide solid electrolytes with extremely high ionic conductivity, and are preferable as the sulfide solid electrolytes to be obtained by the production method of the present embodiment.

(Sulfide Solid Electrolyte)

In the description herein, the "solid electrolyte" means an electrolyte that maintains a solid state at 25°C under a nitrogen atmosphere. The sulfide solid electrolyte in the present embodiment contains a lithium atom, a sulfur atom, a phosphorus atom, and a halogen atom, and has ionic conductivity attributed to the lithium atom.

The "sulfide solid electrolyte" includes both an amorphous sulfide solid electrolyte and a crystalline sulfide solid electrolyte.

In the description herein, the crystalline sulfide solid electrolyte is a sulfide solid electrolyte in which a peak derived from the solid electrolyte is observed in an X-ray diffraction pattern in X-ray diffractometry, and the presence or absence of a peak derived from a raw material of the sulfide solid electrolyte is not considered. That is, the crystalline sulfide solid electrolyte includes a crystal structure derived from the solid electrolyte, and a part thereof may be a crystal structure derived from the solid electrolyte, or the whole thereof may be a crystal structure derived from the solid electrolyte. As long as the crystalline sulfide solid electrolyte has the X-ray diffraction pattern as described above, a part of the crystalline sulfide solid electrolyte may include an amorphous sulfide solid electrolyte. Therefore, the crystalline sulfide solid electrolyte includes a so-called glass ceramic obtained by heating an amorphous sulfide solid electrolyte to a crystallization temperature or higher.

In addition, in the description herein, the amorphous sulfide solid electrolyte is a halo pattern in which a peak other than a peak derived from a material is not substantially observed in an X-ray diffraction pattern by an X-ray diffractometry, and the presence or absence of a peak derived from a raw material of the sulfide solid electrolyte does not matter.

[Method for producing a sulfide solid electrolyte]

The method for producing a sulfide solid electrolyte according to the present embodiment is

a method for producing a sulfide solid electrolyte including
mixing, in a solvent, a raw material-containing substance that contains a plurality of raw materials each containing at least one atom selected from a lithium atom, a phosphorus atom, a sulfur atom, and a halogen atom, and
subsequently heating the mixture, wherein
the raw material-containing substance contains elemental sulfur and lithium sulfide, and
the elemental sulfur is used in an amount of more than 1.0 mole based on 1.0 mole of the lithium sulfide.

[Mixing raw material-containing substance]

The production method of the present embodiment includes mixing, in a solvent, a raw material-containing substance that contains a plurality of raw materials each containing at least one atom selected from a lithium atom, a phosphorus atom, a sulfur atom, and a halogen atom.

Regarding the production method of the present embodiment, the raw material-containing substance will be explained first.

(Raw Material-Containing Substance)

The raw material-containing substance used in the present embodiment is a substance that contains a plurality of raw materials each containing at least one atom selected from a lithium atom, a sulfur atom, a phosphorus atom, and a halogen atom, and includes elemental sulfur and lithium sulfide. That is, the raw material-containing substance is a substance that contains at least elemental sulfur and lithium sulfide, and further contains a plurality of raw materials each containing at least one atom selected from a lithium atom, a sulfur atom, a phosphorus atom, and a halogen atom.

Examples of the raw material contained in the raw material-containing substance includes, a raw material containing at least two atoms selected from the above four atoms, such as lithium sulfides; lithium halides such as lithium fluoride, lithium chloride, lithium bromide, and lithium iodide ; phosphorus sulfides such as diphosphorus trisulfide ($P_2S_3$) and diphosphorus pentasulfide ($P_2S_5$); phosphorus halides such as various phosphorus fluorides ($PF_3$ and $PF_5$), various phosphorus chlorides ($PCl_3$, $PCl_5$, and $P_2Cl_4$), various phosphorus bromides ($PBr_3$ and $PBr_5$), and various phosphorus iodides ($PI_3$ and $P_2I_4$); and thiophosphoryl halides such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$), and preferably chlorine ($Cl_2$), bromine ($Br_2$), and iodine ($I_2$).

Examples that can be used as raw materials other than the above include a raw material containing at least one atom selected from the above four kinds of atoms and containing atoms other than the four kinds of atoms, more specifically, lithium compounds such as lithium oxide, lithium hydroxide, and lithium carbonate; alkali metal sulfides such as sodium sulfide, potassium sulfide, rubidium sulfide, cesium sulfide: metal sulfides such as silicon sulfide, germanium sulfide, boron sulfide, gallium sulfide, tin sulfide ($SnS$, $SnS_2$), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

Among the above, lithium sulfides, phosphorus sulfide such as diphosphorus trisulfide ($P_2S_3$) and diphosphorus pentasulfide ($P_2S_5$), halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide are preferred. Furthermore, when introducing an oxygen atom into the solid electrolyte, phosphoric acid compounds such as lithium oxide, lithium hydroxide, and lithium phosphate are preferred.

As the halogen atom, a chlorine atom, a bromine atom and an iodine atom are preferred, and at least one selected from these atoms is preferred.

Thus, as the lithium halide, lithium chloride, lithium bromide and lithium iodide are preferred, and as the halogen simple substance, chlorine ($Cl_2$), bromine ($Br_2$) and iodine ($I_2$) are preferred. In addition, these may be used alone or in combination of a plurality of kinds thereof.

Preferred combinations of the raw materials preferably include, for example, a combination of lithium sulfide, elemental sulfur, diphosphorus pentasulfide, and lithium halide, and a combination of lithium sulfide, elemental sulfur, diphosphorus pentasulfide, and a halogen simple substance; and as the lithium halide, lithium chloride, lithium bromide, and lithium iodide are preferred, and as the halogen simple substance, chlorine, bromine and iodine are preferred.

In the present embodiment, $Li_3PS_4$ containing a $PS_4$ structure can also be used as part of the raw material. Specifically, $Li_3PS_4$ is prepared by producing it first, etc., and used as a raw material.

The content of $Li_3PS_4$ relative to the total raw materials is preferably 60 to 100% by mole, more preferably 65 to 90% by mole, and even more preferably 70 to 80% by mole.

Further, when using $Li_3PS_4$ and a halogen simple substance, the content of the halogen simple substance relative to $Li_3PS_4$ is preferably 1 to 50% by mole, more preferably 10 to 40% by mole, even more preferably 20 to 30% by mole, and further more preferably 22 to 28% by mole.

The lithium sulfide used in the present embodiment is preferably particles.

The average particle diameter ($D_{50}$) of the lithium sulfide particles is preferably 0.1 μm or more and 1000 μm or less, more preferably 0.5 μm or more and 100 μm or less, and even more preferably 1 μm or more and 20 μm or less. In the description herein, the average particle diameter ($D_{50}$) is a particle diameter which reaches 50% (volume-based) of the whole by sequentially integrating particles from the smallest particle diameter when a particle size distribution integration curve is drawn, and the volume distribution is an average particle diameter which can be measured using, for example, a laser diffraction/scattering type particle size distribution measurement device. In addition, among the raw materials exemplified above, it is preferable that the solid raw material has an average particle diameter similar to that of the lithium sulfide particles described above. That is, it is preferable that the average particle diameter of the lithium sulfide particles is within the same range as that of the lithium sulfide particles described above.

(Regarding the blending ratio of raw materials)

In the production method of the present embodiment, the amount of elemental sulfur used is more than 1.0 mole based on 1.0 mole of lithium sulfide. In this way, the excessive use of elemental sulfur promotes the generation of sulfur radicals, and as a result, a sulfide solid electrolyte with improved ionic conductivity can be efficiently produced. The amount of elemental sulfur used is, from the viewpoint of more efficiently producing a sulfide solid electrolyte with improved ionic conductivity, preferably 1.2 moles or more, more preferably 1.5 moles or more, and even more preferably 1.7 moles or more. Although the upper limit is not particularly limited, from the viewpoint of obtaining a sulfide solid electrolyte more efficiently, it is sufficient to set the upper limit to about 4.0 moles or less, and preferably 3.0 moles or less.

In addition, the amount of elemental sulfur used is preferably 140% or more, more preferably 150% or more, even more preferably 160% or more, and still more preferably 170% or more, based on the amount of sulfur atoms required to form the composition of the sulfide solid electrolyte to be obtained by the production method of the present embodiment. Further, although the upper limit is not particularly limited, from the viewpoint of obtaining a sulfide solid electrolyte more efficiently, it is sufficient to set the upper limit to about 300% or less, preferably 280% or less, more preferably 250% or less, and even more preferably 230% or less.

When using lithium sulfide, elemental sulfur, diphosphorus pentasulfide and lithium halide as raw materials, the ratio of lithium sulfide relative to the total of lithium sulfide and diphosphorus pentasulfide is preferably 65 to 85% by mole, more preferably 70 to 82% by mole, and even more preferably 74 to 80% by mole, from the viewpoint of obtaining higher chemical stability and higher ionic conductivity.

When using lithium sulfide, elemental sulfur, diphosphorus pentasulfide, lithium halide, and other raw materials used as necessary, the content of lithium sulfide and diphosphorus pentasulfide relative to the total of these is preferably 50 to 99% by mole, more preferably 55 to 90% by mole, and even more preferably 60 to 85% by mole.

When using lithium bromide and lithium iodide in combination as lithium halides, the ratio of lithium bromide relative to the total of lithium bromide and lithium iodide is preferably 1 to 99% by mole, more preferably 20 to 80% by mole, even more preferably 35 to 80% by mole, particularly preferably 45 to 70% by mole, from the viewpoint of improving ionic conductivity.

Furthermore, when using lithium bromide and lithium chloride in combination as lithium halides, the ratio of lithium bromide relative to the total of lithium bromide and lithium chloride is preferably 1 to 99% by mole, more preferably 15 to 75% by mole, even more preferably 25 to 60% by mole, and particularly preferably 35 to 45% by mole, from the viewpoint of improving ionic conductivity.

When a halogen simple substance is used as the raw material, and when lithium sulfide, elemental sulfur, or diphosphorus pentasulfide are used, relative to the total number of moles of lithium sulfide and diphosphorus pentasulfide excluding lithium sulfide having the same number of moles as the number of moles of the single halogen substance, the ratio of the number of moles of lithium sulfide excluding lithium sulfide having the same number of moles as the number of moles of the single halogen substance preferably falls within a range of 60 to 90%, more preferably falls within a range of 65 to 85%, further preferably falls within a range of 68 to 82%, still more preferably falls within a range of 72 to 78%, particularly preferably falls within a range of 73 to 77%. This is because higher ionic conductivity can be obtained with these ratios.

Further, from the viewpoint similar to this, when lithium sulfide, elemental sulfur, diphosphorus pentasulfide, and a halogen simple substance are used, the content of the single halogen substance relative to the total amount of lithium sulfide, diphosphorus pentasulfide, and the single halogen substance is preferably 1 to 50 mol%, more preferably 2 to 40 mol%, further preferably 3 to 25 mol%, still more preferably 3 to 15 mol%.

When using lithium sulfide, elemental sulfur, diphosphorus pentasulfide, halogen simple substance, and lithium halide, the content of halogen simple substance ($\alpha$% by mole) and the content of lithium halide ($\beta$% by mole) relative to the total amount of lithium sulfide, diphosphorus pentasulfide, halogen simple substance, and lithium halide, preferably satisfy the following formula (2), more preferably satisfy the following formula (3), even more preferably satisfy the following formula (4), and further more preferably satisfy the following formula (5).

$$2 \leq 2\alpha + \beta \leq 100 \ ... \ (2)$$

$$4 \leq 2\alpha + \beta \leq 80 \ ... \ (3)$$

$$6 \leq 2\alpha + \beta \leq 50 \ ... \ (4)$$

$$6 \leq 2\alpha + \beta \leq 30 \ ... \ (5)$$

When two types of halogens are used as single substances, and the number of moles of halogen atoms in one substance is A1 while the number of moles of halogen atoms in the other substance is A2, A1 : A2 is preferably 1 : 99 to 99 : 1, more preferably 10 : 90 to 90 : 10, even more preferably 20 : 80 to 80 : 20, and further more preferably 30 : 70 to 70 : 30.

When two types of halogen simple substances are used and the two types of halogen simple substances are bromine and iodine, in the case where the number of moles of bromine is A1 and the number of moles of iodine is A2, A1 : A2 is preferably 1 : 99 to 99 : 1, more preferably 20 : 80 to 80 : 20, even more preferably 35 : 65 to 80 : 20, and further more preferably 45 : 55 to 70 : 30.

Further, when the two types of halogen simple substances are bromine and chlorine, and the number of moles of bromine is B1 while the number of moles of chlorine is B2, B1 : B2 is preferably 1 : 99 to 99 : 1, more preferably 15 : 85 to 75 : 25, even more preferably 25 : 75 to 60 : 40, and further more preferably 35 : 45 to 65 : 55.

(Solvent)

As the solvent used when mixing the raw materials, an organic solvent is preferably used, and in particular, it is preferable to use a solvent containing a heteroatom. Preferred examples of heteroatoms contained in the solvent include oxygen atoms, nitrogen atoms, sulfur atoms, chlorine atoms, and phosphorus atoms, with oxygen atoms and nitrogen atoms being preferable. The solvent containing a heteroatom may contain one kind of these heteroatoms or a plurality of kinds of these heteroatoms.

Examples of such solvents containing heteroatoms include solvents containing oxygen atoms, such as alcohol solvents, ether solvents, ester solvents, aldehyde solvents, and ketone solvents; solvents containing nitrogen atoms, such as amine solvents and nitrile solvents; and solvents containing oxygen atoms and nitrogen atoms, such as amide solvents. Among these, alcohol solvents and ether solvents are preferred as solvents containing oxygen atoms, and nitrile solvents are preferred as solvents containing nitrogen atoms. The use of these solvents promotes the generation of sulfur radicals and the formation of an electrolyte precursor (polysulfide), and a sulfide solid electrolyte with few impurities and high ionic conductivity can be efficiently obtained.

These solvents may be used alone or in combination of a plurality of kinds thereof, and among these solvents, it is preferable to use an alcohol solvent. By using the alcohol solvent, the effect of promoting the generation of sulfur radicals and the formation of the electrolyte precursor (polysulfide) is particularly improved. In addition, in order to improve the effect of promoting the generation of sulfur radicals and the formation of the electrolyte precursor (polysulfide) in a well-balanced manner, it is preferable to use an alcohol solvent in combination with another solvent.

As the other solvent, it is preferable to use one type of solvent selected from a solvent having an oxygen atom other than the alcohol solvent and a solvent having a nitrogen atom, and as a solvent having an oxygen atom other than the alcohol solvent, an ether solvent is preferable, and as a solvent having a nitrogen atom, a nitrile solvent is preferable. That is, the solvent preferably includes an alcohol solvent and at least one organic solvent selected from an ether solvent and a nitrile solvent. In particular, it is preferable to use a combination of an alcohol solvent, an ether solvent, and a nitrile solvent. Since the generation of sulfur radicals and the formation of the electrolyte precursor (polysulfide) are promoted in a well-balanced manner, a sulfide solid electrolyte with few impurities and high ionic conductivity can be efficiently obtained.

(Alcohol Solvent)

Examples of the alcohol solvent include aliphatic alcohols, alicyclic alcohols, heterocyclic alcohols, and aromatic alcohols, and considering ease of availability and cost, aliphatic alcohols, alicyclic alcohols, and aromatic alcohols are preferred, with aliphatic alcohols being more preferred.

Representative examples of aliphatic alcohols include saturated or unsaturated monohydric aliphatic alcohols such as methanol, ethanol, various propanols, allyl alcohol, various butanols, and various buteneols; and saturated or unsaturated polyhydric aliphatic alcohols such as various propanediols, various propenediols, various butanediols, various butenediols, various hexanediols, various hexenediols, various butanetriols, erythritol, pentaerythritol, and dipentaerythritol.

In the present description, "various" means that all possible isomers are included, for example, for various butanols, 1-butanol, 2-butanol, 2-methyl-1-propanol, and 1,1-dimethylethanol are all included. In addition, even if "various" is not used, compounds described in a format in which the substitution position number is not specified include all possible isomers.

The aliphatic hydrocarbon group in the aliphatic alcohol may be linear or branched, and may be saturated or unsaturated.

The carbon number of the aliphatic alcohol is preferably 1 or more, more preferably 2 or more, and the upper limit is preferably 12 or less, more preferably 8 or less, and even more preferably 4 or less.

The aliphatic alcohol may be partially substituted, and preferred examples thereof include alkanolamines in which a portion of ethanolamine, propanolamine, dimethylethanolamine, etc. is substituted with an amino group, and alcohols in which a portion of fluoroalcohol, etc. is substituted with a halogen atom.

Representative preferred examples of alicyclic alcohols include monohydric or polyhydric saturated or unsaturated monocyclic alicyclic alcohols such as cyclopropanol, methylcyclopropanol, cyclopropanemethanol, cyclobutanol, cyclobutenol, cyclopentanol, cyclopentenol, cyclohexanol, methylcyclohexanol, cyclohexenol, cyclohexanediol, and cyclohexanetriol; and monohydric or polyhydric polycyclic alicyclic alcohols such as cyclopentylcyclopentanol, cyclohexylcyclohexanol, cyclohexylphenylcyclohexanol, and bicyclohexanol.

The carbon number of the alicyclic alcohol is preferably 3 or more, and the upper limit is preferably 12 or less, more preferably 10 or less, and even more preferably 8 or less.

The alicyclic alcohol may be partially substituted, and preferred examples thereof include those partially substituted with saturated or unsaturated hydrocarbon groups (including linear and branched groups) such as alkyl groups and alkenyl groups, for example, those partially substituted with amino groups such as aminomethylcyclopropanol, and those partially substituted with halogen atoms. In addition, the alicyclic alcohol may be substituted with a substituent such as an amide group and a cyano group.

Representative preferred examples of the heterocyclic alcohol include monocyclic heterocyclic alcohols such as oxetaneol, oxetanemethanol, furfuryl alcohol, tetrahydrofurfuryl alcohol, tetrahydropyranmethanol, morpholineethanol, and pyridinemethanol; and polycyclic condensed heterocyclic alcohols such as benzofuranmethanol and dihydrobenzofuranmethanol.

The carbon number of the heterocyclic alcohol is preferably 3 or more, and the upper limit is preferably 24 or less, more preferably 18 or less, and even more preferably 12 or less.

The heterocyclic alcohol may be partially substituted in the same manner as the alicyclic alcohol described above.

Representative preferred examples of the aromatic alcohol include monocyclic aromatic alcohols such as benzyl alcohol, salicyl alcohol, benzenedimethanol, methoxyphenylmethanol, trimethoxyphenylmethanol, and phenethyl alcohol; polycyclic aromatic alcohols such as diphenylmethanol and triphenylmethanol; and condensed polycyclic aromatic alcohols such as naphthalenemethanol, anthracenemethanol, benzofuranmethanol, and dihydrobenzofuranmethanol.

The carbon number of the aromatic alcohol is preferably 7 or more, and the upper limit is preferably 24 or less, more preferably 20 or less, and even more preferably 16 or less.

The aromatic alcohol may be partially substituted in the same manner as the alicyclic alcohol described above.

The above examples are merely representative of preferred alcohol solvents, and the solvents that can be used in the production method of the present embodiment are not limited to the above examples.

The alcohol solvent may be any of a primary alcohol, a secondary alcohol, and a tertiary alcohol, and is preferably a primary alcohol. In addition, the alcohol solvent may be a monohydric alcohol having one hydroxy group or a polyhydric alcohol having two or more hydroxy groups, and is preferably a monohydric alcohol.

(Ether Solvent)

Examples of the ether solvent include aliphatic ethers, alicyclic ethers, heterocyclic ethers, and aromatic ethers. Considering ease of availability and cost, aliphatic ethers, alicyclic ethers, and aromatic ethers are preferred, aliphatic ethers and alicyclic ethers are more preferred, and alicyclic ethers are even more preferred.

Representative preferred examples of the aliphatic ether include, monoethers such as dimethyl ether, diethyl ether, diisopropyl ether, dibutyl ether, and tert-butyl methyl ether; diethers such as dimethoxymethane, dimethoxyethane, diethoxymethane, diethoxyethane; polyethers having three or more ether groups such as diethylene glycol dimethyl ether (diglyme) and triethylene oxide glycol dimethyl ether (triglyme); and ethers containing hydroxy groups such as diethylene glycol and triethylene glycol.

The carbon number of the aliphatic ether is preferably 2 or more, more preferably 3 or more, even more preferably 4 or more, and the upper limit is preferably 10 or less, more preferably 8 or less, and even more preferably 6 or less.

In addition, the aliphatic alcohol may be linear or branched.

Representative preferred examples of alicyclic ethers include monocyclic alicyclic ethers such as ethylene oxide, propylene oxide, furan, tetrahydrofuran, pyran, tetrahydropyran, dimethoxytetrahydrofuran, cyclopentyl methyl ether, dioxane, dioxene, dioxin, and dioxolane; and polycyclic alicyclic ethers such as dicyclopentyl ether and dicyclohexyl ether.

Representative preferred examples of heterocyclic ethers include monocyclic heterocyclic ethers such as morpholine and hydroxymethyldimethoxypyridine; and polycyclic condensed heterocyclic ethers such as benzofuran, benzopyran, dibenzofuran, and methoxyindole.

The carbon number of the alicyclic ether and the heterocyclic ether is preferably 3 or more, and the upper limit is preferably 16 or less, more preferably 14 or less, and even more preferably 10 or less.

Representative preferred examples of aromatic ethers include monocyclic aromatic ethers such as methyl phenyl ether (anisole) and ethyl phenyl ether; polycyclic aromatic ethers such as dibenzyl ether, diphenyl ether, and benzyl phenyl ether; and condensed polycyclic aromatic ethers such as benzyl naphthyl ether and bisnaphthyl ether.

The carbon number of the aromatic ether is preferably 7 or more, more preferably 8 or more, and the upper limit is preferably 16 or less, more preferably 14 or less, and even more preferably 12 or less.

The ether compound used in the present embodiment may be substituted with a substituent, such as a linear or branched hydrocarbon group such as an alkyl group and an alkenyl group, an alkoxyl group (the alkyl group may be linear or branched), a hydroxy group, an amino group, an amide group, and a cyano group, or a halogen atom.

Among the above ether compounds, alicyclic ethers are preferred, monocyclic alicyclic ethers are more preferred, and tetrahydrofuran is particularly more preferred, from the viewpoint of obtaining higher ionic conductivity.

(Nitrile Solvent)

Examples of nitrile solvents include aliphatic nitriles, alicyclic nitriles, heterocyclic nitriles, and aromatic nitriles, and in consideration of ease of availability and cost, aliphatic nitriles are preferred.

Representative preferred examples of the aliphatic nitrile include saturated or unsaturated aliphatic nitriles having one nitrile group, such as acetonitrile, acrylonitrile, methoxyacetonitrile, propionitrile, methoxypropionitrile, and butyronitrile; and saturated or unsaturated aliphatic nitriles having two or more nitrile groups, such as propanedinitrile, propanetricarbonitrile, butanedinitrile, butenedinitrile, butanetricarbonitrile, pentanedinitrile, pentanetricarbonitrile, hexanedinitrile, hexenedinitrile, hexanetricarbonitrile, and methylenepentanedinitrile.

The carbon number of the aliphatic nitrile is preferably 2 or more, and the upper limit is preferably 10 or less, more preferably 8 or less, and even more preferably 4 or less. Further, the carbon number of the aliphatic hydrocarbon group in the aliphatic nitrile is preferably 1 or more, and the upper limit is preferably 8 or less, more preferably 6 or less, even more preferably 2 or less.

In addition, the aliphatic hydrocarbon group in the aliphatic nitrile may be linear or branched.

Representative preferred examples of the alicyclic nitrile include monocyclic or polycyclic alicyclic nitriles having one nitrile group, such as cyanocyclopropane, cyclobutanecarbonitrile, hydroxycyclobutanecarbonitrile, oxocyclobutanecarbonitrile, cyclopentanecarbonitrile, furancarbonitrile, tetrahydropyrancarbonitrile, cyclohexanecarbonitrile, and bicyclobutanecarbonitrile; and alicyclic nitriles having two or more nitrile groups, such as furandicarbonitrile, cyclobutanedicarbonitrile, cyclopentanedicarbonitrile, cyclohexanedicarbonitrile, and cyclohexanetricarbonitrile.

Representative preferred examples of heterocyclic nitriles include monocyclic heterocyclic nitriles having one or two or more nitrile groups, such as morpholinecarbonitrile, tetrahydrofurfurylcarbonitrile, cyanopyridine, pyridinedicarbonitrile, pyridinetricarbonitrile, and furfurylmalononitrile; and polycyclic or polycyclic condensed heterocyclic nitriles having one or two or more nitrile groups, such as benzofurancarbonitrile, dibenzofurandicarbonitrile, and dicyanobipyridine.

The carbon number of the alicyclic nitrile and the heterocyclic nitrile is preferably 3 or more, and the upper limit is preferably 16 or less, more preferably 14 or less, and even more preferably 10 or less.

Representative preferred aromatic nitriles include monocyclic aromatic nitriles having one or two or more nitrile groups, such as phenylacetonitrile, cyanotoluene, benzonitrile, benzenedicarbonitrile, and benzenetricarbonitrile; and polycyclic or condensed polycyclic aromatic nitriles having one or two or more nitrile groups, such as biphenyldicarbonitrile, phenylcyclobutanecarbonitrile, naphthalenecarbonitrile, naphthalenedicarbonitrile, naphthalenetricarbonitrile, anthracenecarbonitrile, and cyclopentylbenzonitrile.

The carbon number of the aromatic nitrile is preferably 7 or more, more preferably 8 or more, and the upper limit is preferably 16 or less, more preferably 14 or less, and even more preferably 12 or less.

The ether compound used in the present embodiment may be substituted with a substituent, such as a linear or branched hydrocarbon group such as an alkyl group and an alkenyl group, an alkoxyl group (the alkyl group may be linear or branched), a hydroxy group, an amino group, an amide group, and a cyano group, or a halogen atom.

(Other Solvents Having Heteroatoms)

In addition, with regard to the amine solvents and amide solvents exemplified as solvents having a heteroatom other than the above alcohol solvents, ether solvents, and nitrile solvents, preferred examples include heterocyclic aromatic amine solvents such as pyridine; and amide solvents such as dimethylformamide, dimethylacetamide, hexamethylphosphoramide, and N-methylpyrrolidone.

(Other Solvents)

For the solvent in the production method of the present embodiment, other solvents than the above-mentioned solvents may be used, for example, aliphatic hydrocarbon solvents such as hexane, pentane, 2-ethylhexane, heptane, octane, decane, undecane, dodecane, and tridecane; alicyclic hydrocarbon solvents such as cyclohexane and methylcyclohexane; and aromatic hydrocarbon solvents such as benzene, toluene, xylene, mesitylene, ethylbenzene, and tert-butylbenzene.

In this case, the smaller the amount of the other solvent used, the better. For example, it is preferably 50.0 parts by volume or less, more preferably 30.0 parts by volume or less, and even more preferably 15.0 parts by volume or less, relative to 100.0 parts by volume of the above-mentioned solvent (i.e., the solvent containing a heteroatom). In addition, it is of course preferable to use only the above-mentioned solvent (i.e., the solvent containing a heteroatom) without using other solvents.

(Amount of Solvent Used)

In the production method of the present embodiment, when an alcohol solvent is used, the amount of the alcohol solvent used is, relative to 1.0 mole of lithium sulfide used as a raw material, preferably 0.005 moles or more, more preferably 0.010 moles or more, even more preferably 0.015 moles or more, and still more preferably 0.020 moles or more, and the upper limit is preferably 20.0 moles or less, more preferably 16.0 moles or less, and even more preferably 10.0 moles or less.

In addition, when at least one organic solvent selected from an alcohol solvent, an ether solvent, and a nitrile solvent is used, and an alcohol solvent is used, the total amount of the ether solvent and the nitrile solvent used is preferably 2.0 parts by volume or more, more preferably 5.0 parts by volume or more, even more preferably 15.0 parts by volume or more, and still more preferably 50.0 parts by volume or more, and particularly preferably 150.0 parts by volume or more, relative to 1.0 part by volume of the alcohol solvent used, and the upper limit is preferably 10,000.0 parts by volume or less, more preferably 9,000.0 parts by volume or less, even more preferably 8,000.0 parts by volume or less, and still more preferably 7,800.0 parts by volume or less.

(Mixing)

In the production method of the present embodiment, the raw material-containing substance containing raw materials is mixed in a solvent. By mixing the raw material-containing substance in the solvent, the generation of sulfur radicals and the formation of an electrolyte precursor are promoted, and a sulfide solid electrolyte with few impurities and high ionic conductivity can be efficiently obtained.

There is no particular restriction on the method of mixing the raw material-containing substance in the solvent, and it is only necessary to charge and mix the solvent and the raw material-containing substance in a device capable of mixing a raw material-containing substance in a solvent. For example, it is preferable to gradually add the raw material-containing substance after supplying the solvent into a tank and operating stirring blades. In addition, it is also preferable to gradually add the solvent after supplying the raw material-containing substance into the tank and operating the stirring blades. Since a good mixed state of the raw material-containing substance is obtained, the dispersion of the raw materials is improved, and the generation of the sulfur radicals and the formation of the electrolyte precursor (polysulfide) are promoted.

However, when using a halogen simple substance as a raw material, the raw material may not be solid, specifically, at room temperature and normal pressure, fluorine and chlorine are gases, and bromine is liquid. In such cases, for example, when the raw material is a liquid, it may be supplied with the solvent into the tank separately from other solid raw materials, and when the raw material is a gas, it may be supplied by blowing into the solvent to which the solid raw material has been added.

There is no particular restriction on the order in which the raw materials of the raw material-containing substance are charged and mixed. Considering the work efficiency, it is preferable use collective mixing, that is, to charge and mix all the raw materials at the same time.

In addition, in order to improve the solubility of the raw materials, suppress the generation of impurities, and more efficiently obtain a sulfide solid electrolyte having high ionic conductivity, it is preferable to use split mixing, that is, to divide the raw materials into two raw material groups, raw material groups 1 and 2, and mixing the raw material group 1 and then mixing the raw material group 2.

In the case of performing split mixing, as described above, it is preferable that the raw material group 1 contains elemental sulfur. This promotes the formation of sulfur radicals, and a sulfide solid electrolyte having a high ionic conductivity can be obtained more efficiently.

From the same viewpoint, as described above, a combination of the raw material group 1 including a raw material containing at least one atom selected from a lithium atom, a phosphorus atom, and a sulfur atom, elemental sulfur, and lithium sulfide, and the raw material group 2 including a raw material containing a halogen atom, is preferred. This is because the raw material group 1 contains elemental sulfur and lithium sulfide, and the reaction therebetween promotes the formation of sulfur radicals via lithium polysulfides. In addition, from the same viewpoint, a combination of the raw material group 1 including a raw material containing a halogen atom, elemental sulfur, and lithium sulfide, and the raw material group 2 including a raw material containing a phosphorus atom and a sulfur atom, is preferred.

In the production method of the present embodiment, the order in which the raw materials are charged and mixed may be selected depending on whether the work efficiency is regarded as important or the ionic conductivity of the sulfide solid electrolyte is regarded as important.

Also, as described above, in the production method of the present embodiment, $Li_3PS_4$ containing the $PS_4$ structure can be prepared by producing it first, etc., and used as a raw material contained in the raw material-containing substance. $Li_3PS_4$ can be produced by blending lithium sulfide and diphosphorus pentasulfide in a molar ratio of 75:25, for example. In the production method of the present embodiment, when lithium sulfide and diphosphorus pentasulfide are used as raw materials, it is also possible to mix, as the raw material group 1, a raw material group containing lithium sulfide and diphosphorus pentasulfide in a predetermined molar ratio such as 75:25 and containing elemental sulfur in a solvent, and then to add and mix, as the raw material group 2, a raw material group including a raw material containing a halogen atom such as lithium halide, and other remaining raw materials required for the production of the desired sulfide solid electrolyte, such as the remaining of lithium sulfide. By forming an electrolyte precursor (polysulfide) containing the basic structure of $Li_3PS_4$ in advance, a sulfide solid electrolyte can be obtained more efficiently.

Here, the predetermined molar ratio of lithium sulfide to diphosphorus pentasulfide is preferably 55 to 85 : 15 to 45, more preferably 60 to 80 : 20 to 40, and even more preferably 65 to 75 : 25 to 35.

The production method of the present embodiment is characterized in that the raw material-containing substance is mixed in the solvent. In other words, since it is sufficient to mix the raw material-containing substance and does not require pulverization, it can also be produced by a method which does not use equipment that is generally called as a grinder such as media type grinders including ball mill and a bead mill, and used for the purpose of pulverizing solid electrolyte raw materials. In the production method of the present embodiment, the raw material-containing substance is simply mixed in the solvent, and the solvent and the raw materials are mixed to generate polysulfide, which is an electrolyte precursor. When the polysulfide is decomposed by heating or the like, an amorphous sulfide solid electrolyte, and even a crystalline sulfide solid electrolyte, can be formed.

In order to shorten the mixing time for obtaining the electrolyte precursor or to pulverize the raw materials, the mixture of raw materials in the solvent may be pulverized by a pulverizer; however, as mentioned above, it is preferable not to use a pulverizer.

Examples of the devices for mixing the raw material-containing substance in the solvent include a mechanical stirring type mixer equipped with stirring blades in a tank. Examples of the mechanical stirring type mixer include high-speed stirring type mixers and double-arm mixers, and high-speed stirring type mixers are preferably used from the viewpoint of increasing the uniformity of the raw material in the mixture of the raw material-containing substance and obtaining higher ionic conductivity. Further, examples of the high-speed stirring type mixer include a vertical axis rotation type mixer and a horizontal axis rotation type mixer, and either type of mixer may be used.

Examples of the shape of the stirring blade used in the mechanical stirring type mixer include an anchor type, a blade type, an arm type, a ribbon type, a multi-stage blade type, a double-arm type, a shovel type, a twin-screw blade type, a flat blade type, and a C-blade type. From the viewpoint of improving the uniformity of the solid electrolyte raw material and obtaining higher ionic conductivity, a shovel type, a flat blade type, a C-blade type, etc. are preferable. Further, in a mechanical stirring type mixer, it is preferable to install a circulation line for discharging an object to be stirred outside the mixer and returning it to the inside of the mixer. By doing so, raw materials with heavy specific gravity such as lithium halide are stirred without settling or stagnation, and it becomes possible to mix more uniformly.

The location of the circulation line to be installed is not particularly limited, however it is preferably installed at a location such that the object to be stirred is discharged from the bottom of the mixer and returned to the top of the mixer. This makes it easier to uniformly stir the solid electrolyte raw material, which easily settles, on the convection caused by circulation. Furthermore, it is preferable that the return port is located below the surface of the liquid to be stirred. By doing so, it is possible to suppress the liquid to be stirred from splashing and adhering to the wall surface inside the mixer.

Although the upper limit of the mixing time when mixing the raw material-containing substance in the solvent is not particularly limited, considering the efficiency, it is preferably 240 minute or less, more preferably 60 minutes or less, even more preferably 30 minutes or less, and still more preferably 15 minutes or less, and the lower limit thereof is usually 0.1 minutes or more, preferably 1 minutes or more, and more preferably 3 minutes or more.

In addition, the temperature conditions for mixing the raw material-containing substance in the solvent are not particularly limited, and are, for example, -30 to 100°C, preferably -10 to 50°C, and more preferably around room temperature (23°C) (for example, approximately room temperature ± 5°C).

[Heating]

The production method of the present embodiment includes heating after mixing the raw material-containing substance. By heating, the polysulfide formed can be decomposed, the solvent can be removed, the elemental sulfur formed due to the decomposition of the polysulfide can be removed, and crystallization can be performed. In addition, although the elemental sulfur can be removed by heating, for the removal of the elemental sulfur, different methods such as solvent washing and hydrodesulfurization may be used.

The heating temperature is not particularly limited as long as it is at room temperature or higher, and although room temperature is variable and cannot be generalized, it is usually preferably 20°C or higher, and the upper limit is preferably 500°C or lower. When the heating temperature is within the above range, the decomposition of the polysulfide, the removal of the solvent, and the removal of elemental sulfur can be performed more efficiently, and crystallization can be performed.

In addition, it is preferable to perform the heating in multiple stages. For example, it is preferable to perform heating (first heating) mainly for decomposing the polysulfide produced, removing the solvent, and removing elemental sulfur, and then perform heating (second heating) for crystallization. More specifically, it is preferable to perform the first heating at a heating temperature of 20°C or higher and lower than 150°C, and the second heating at a heating temperature of 150°C or higher and 500°C or lower.

The heating temperature in the first heating may be 20°C or higher and lower than 150°C. For example, heating at a lower temperature may be followed by heating at a higher temperature, i.e., the first heating may be performed by further heating in multiple stages.

Typically, the removal of the solvent begins at 20°C or higher, the decomposition of the polysulfide begins at 60°C or higher, and the removal of sulfur begins at 100°C or higher. By carrying out multi-stage heating at heating temperatures according to these purposes, each purpose can be achieved more efficiently, and thus it becomes easier to obtain a sulfide solid electrolyte with improved ionic conductivity. In particular, by ensuring the removal of elemental sulfur, the generation of impurities due to remaining elemental sulfur can be further suppressed, making it easier to obtain a sulfide solid electrolyte with improved ionic conductivity.

For example, when heating at a lower temperature (first heating-1), the heating temperature is preferably 20°C or higher, with an upper limit of preferably lower than 60°C, and more preferably 50°C or lower. By setting the heating temperature in the temperature range, it becomes possible to remove the solvent.

Subsequently, when heating at a higher temperature (first heating-2), the heating temperature is preferably 60°C or higher, more preferably 65°C or higher, even more preferably 75°C or higher, still more preferably 95°C or higher, and particularly preferably 110°C or higher, and the upper limit is lower than 150°C, more preferably 145°C or lower, even more preferably 135°C or lower, and still more preferably 130°C or lower. By setting the heating temperature in the temperature range, it becomes possible to mainly perform the decomposition of the polysulfide and the removal of sulfur.

As described above, the first heating can be performed to remove the solvent, decompose the polysulfide, or remove sulfur depending on the heating temperature, and thus various modes can be taken by adjusting the heating temperature. For example, when the heating temperature of the first heating is 60°C or higher (lower than 100°C), it is possible to remove the solvent and even decompose the polysulfide, and thus this is called first heating-1, and by heating at 100°C or higher (lower than 150°C) as first heating-2, it is possible to remove the sulfur. In this case, the first heating-2 is not performed, and as described above, the sulfur can be removed by a method other than heating, such as solvent washing and hydrodesulfurization, and then the second heating can be performed. Methods for removing sulfur, such as solvent washing and hydrodesulfurization, will be described later.

Also, for example, when the heating temperature of the first heating is 20°C or higher (lower than 60°C), the solvent can be removed, so this is called first heatity-1, and when heating at 60°C or higher (lower than 100°C) as first heating-2, the polysulfide can be decomposed, and then heating is performed at 100°C or higher (lower than 150°C) as first heating-3 to remove the sulfur. In this way, it is also possible to perform three-stage heating. In this case, instead of the first heating-3, sulfur can be removed by a method other than heating as described above, and by setting the heating temperature of the first heating-2 to 100°C or higher (lower than 150°C), decomposition of the polysulfide and removal of sulfur can be performed simultaneously.

As described above, the first heating is performed by multi-stage heating; however, when the heating temperature of the first heating is, for example, 100°C or higher, the solvent can be removed, the polysulfide can be decomposed, and sulfur can be removed, and thus multi-stage heating is not necessary.

The heating time of the first heating is not particularly limited as long as it is at least long enough to remove the solvent; however, for example, it is preferably 10 minute or more, more preferably 30 minutes or more, even more preferably 45 minutes or more, and further more preferably 1 hour or more. Further, the upper limit of the heating time is not particularly limited, however it is preferably 24 hours or less, more preferably 10 hours or less, even more preferably 5 hours or less, and further more preferably 3 hours or less.

As for the pressure conditions during the first heating, it is preferable to be under normal pressure or reduced pressure, and in the case of reduced pressure, specifically, it is preferably 85 kPa or less, more preferably 80 kPa or less, and even more preferably 70 kPa or less. The lower limit may be a vacuum (0 kPa), and considering ease of pressure adjustment, it is preferably 1 kPa or more, more preferably 2 kPa or more, and even more preferably 3 kPa or more.

Moreover, heating is preferably performed in an inert gas atmosphere (for example, a nitrogen atmosphere or an argon atmosphere) or a reduced pressure atmosphere (in particular, a vacuum). For example, an inert gas atmosphere containing a certain concentration of hydrogen may be used. This is because deterioration (for example, oxidation) of the sulfide solid electrolyte can be prevented.

Although the heating temperature in the second heating may vary depending on the sulfide solid electrolyte to be produced and cannot be generalized, considering the relationship with the first heating, the heating temperature may be 150°C or higher and 500°C or lower, preferably 160°C or higher, more preferably 200°C or higher, and even more preferably 240°C or higher, with the upper limit being preferably 480°C or lower, more preferably 460°C or lower, and even more preferably 440°C or lower.

The second heating may be performed in multiple stages, similar to the first heating. By carrying out multi-stage heating as the second heating, more reliable crystallization can be achieved.

When multi-stage heating is performed, for example, the heating temperature when heating at a lower heating temperature (second heating-1) may be set to 150°C or higher and lower than 270°C, and the heating temperature when heating at a higher heating temperature (second heating-2) may be set to 270°C or higher and 500°C or lower. The lower limit of the second heating-1 is preferably the lower limit of the temperature of the second heating, and the upper limit is preferably 265°C or lower, and more preferably 255°C or lower. In addition, the upper limit of the second heating-2 is preferably the upper limit of the temperature of the second heating, and the lower limit is preferably 290°C or higher, more preferably 340°C or higher, and even more preferably 375°C or higher.

The heating time and pressure conditions in the second heating are the same as those in the first heating. It is also preferable to perform the second heating in an inert gas atmosphere.

The heating method is not particularly limited; however, examples thereof include methods using various heating devices, such as a hot plate, a vacuum heating device, an argon gas atmosphere furnace, a firing furnace, and a vacuum firing furnace. Further, industrially, a horizontal dryer, a horizontal vibrating fluidized dryer, etc. having a heating unit and a feed mechanism may be used, and they may be selected depending on the processing amount to be heated.

(Removal of Sulfur)

In the production method of the present embodiment, sulfur may be removed by a method other than heating as described above. For example, when the first heating is performed at a temperature of lower than 100°C, it is preferable to remove sulfur by a method other than heating. Examples of methods for removing sulfur include solvent washing and hydrodesulfurization.

The solvent washing method is a method of washing the powder that has been subjected to the first heating with a solvent that dissolves sulfur, for example, an aromatic hydrocarbon solvent such as benzene, toluene, and xylene; or a sulfur-containing organic solvent such as carbon disulfide, and removing the sulfur.

The hydrodesulfurization method is a method of mixing the powder that has been subjected to the first heating with a hydrodesulfurization catalyst, and passing hydrogen through the mixture while heating at 300 to 450°C to remove sulfur through a hydrodesulfurization reaction. Here, preferred examples of hydrodesulfurization catalysts include porous catalysts containing nickel, molybdenum, cobalt, tungsten, etc. as an active metal element, such as NiMo catalysts, CoMo catalysts, and NiW catalysts.

(Amorphous Sulfide Solid Electrolyte)

In the production method of the present embodiment, an amorphous sulfide solid electrolyte is produced by mixing the raw material-containing substance described above or by carrying out the first heating for mainly removing the solvent described above.

The amorphous sulfide solid electrolyte produced in the production method of the present embodiment contains lithium atoms, sulfur atoms, phosphorus atoms, and halogen atoms, and representative examples thereof preferably include solid electrolytes composed of lithium sulfide, phosphorus sulfide, and a lithium halide, for example, $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and solid electrolytes containing other atoms such as oxygen atoms and silicon atoms, for example, $Li_2S$-$P_2S_5$-$Li_2O$-LiI and $Li_2S$-$SiS_2$-$P_2S_5$-LiI. From the viewpoint of obtaining higher ionic conductivity, solid electrolytes composed of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The types of atoms constituting the amorphous sulfide solid electrolyte can be determined by, for example, an ICP emission spectrophotometer.

When the amorphous sulfide solid electrolyte produced in the production method of the present embodiment has at least $Li_2S$-$P_2S_5$, the molar ratio of $Li_2S$ and $P_2S_5$ is preferably 65 to 85 : 15 to 35 from the viewpoint of obtaining higher ionic conductivity, more preferably 70 to 82 : 18 to 30, and even more preferably 74 to 80 : 20 to 26.

When the amorphous sulfide solid electrolyte produced in the production method of the present embodiment is, for example, $Li_2S$-$P_2S_5$-LiI-LiBr, the total content of lithium sulfide and diphosphorus pentasulfide is preferably 60 to 95% by mole, more preferably 65 to 90% by mole, and even more preferably 70 to 85% by mole. Further, the ratio of lithium bromide relative to the total of lithium bromide and lithium iodide is preferably 1 to 99% by mole, more preferably 20 to 90% by mole, even more preferably 40 to 75% by mole, and particularly preferably 45 to 60% by mole.

Moreover, when the amorphous sulfide solid electrolyte produced in the production method of the present embodiment is, for example, $Li_2S$-$P_2S_5$-LiCl-LiBr, the total content of lithium sulfide and diphosphorus pentasulfide is preferably 45 to 80%. by mole, more preferably 50 to 75% by mole, and even more preferably 55 to 70% by mole. In addition, the ratio of lithium bromide relative to the total of lithium bromide and lithium chloride is preferably 1 to 99% by mole, more preferably 15 to 75% by mole, even more preferably 25 to 60% by mole, and particularly preferably 35 to 45% by mole.

The shape of the amorphous sulfide solid electrolyte is not particularly limited, and examples thereof include a particle shape.

The average particle diameter ($D_{50}$) of the particle shaped amorphous sulfide solid electrolyte is, for example, 0.01 $\mu$m or more, further 0.03 $\mu$m or more, 0.05 $\mu$m or more, 0.1 $\mu$m or more, and the upper limit is 200.0 $\mu$m or less, further 100.0 $\mu$m or less, 10.0 $\mu$m or less, 1.0 $\mu$m or less, and 0.5 $\mu$m or less.

(Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and examples of a crystal structure thereof include a $Li_3PS_4$ crystal structure, a $Li_4P_2S_6$ crystal structure, a $Li_7PS_6$ crystal structure, a $Li_7P_3S_{11}$ crystal structure, and a crystal structure having peaks in the vicinity of 20 = 20.2° and in the vicinity of 23.6° (for example, JP 2013-16423 A).

Examples also include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725). The crystal structure of the crystalline sulfide solid electrolyte obtained by the production method of the present embodiment is preferably the thio-LISICON Region II type crystal structure among above, from the viewpoint of obtaining higher ionic conductivity. Herein, the term "thio-LISICON Region II type crystal structure" refers to either a $Li_{4-x}Ge_{1-x}P_xS_4$ system thio-LISICON Region II type crystal structure or a crystal structure similar to a $Li_{4-x}Ge_{1-x}P_xS_4$ system thio-LISICON Region II type crystal structure.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structures is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline $Li_3PS_4$ ($\beta$-$Li_3PS_4$).

In the X-ray diffractometry using CuK$\alpha$ line, the diffracted peak of the $Li_3PS_4$ crystal structure appears, for example, in the vicinity of $2\theta$ = 17.5°, 18.3°, 26.1°, 27.3°, and 30.0°, the diffracted peak of the $Li_4P_2S_6$ crystal structure appears, for example, in the vicinity of $2\theta$ = 16.9°, 27.1°, and 32.5°, the diffraction peak of the $Li_7PS_6$ crystal structure appears, for example, in the vicinity of $2\theta$ = 15.3°, 25.2°, 29.6°, and 31.0°, the diffraction peak of the $Li_7P_3S_{11}$ crystal structure appears, for example, in the vicinity of $2\theta$ = 17.8°, 18.5°, 19.7°, 21.8°, 23.7°, 25.9°, 29.6°, and 30.0°, the diffraction peak of the $Li_{4-x}Ge_{1-x}P_xS_4$ system thio-LISICON Region II type crystal structure appears, for example, in the vicinity of $2\theta$ = 20.1°, 23.9°, and 29.5°, and the diffraction peak of the crystal structure similar to the $Li_{4-x}Ge_{1-x}P_xS_4$ system thio-LISICON Region II type appears, for example, in the vicinity of $2\theta$ = 20.2° and 23.6°. Note that these peak positions may be shifted back and forth within a range of $\pm$0.5°.

A crystalline sulfide solid electrolyte having the argyrodite type crystal structure having the structural skeleton of the above-described $Li_7PS_6$, in which a part of P is substituted with Si, is also preferred.

Examples of the compositional formulas of the argyrodite type crystal structure include a crystal structures represented by the compositional formulas $Li_{7-x}P_{1-y}Si_yS_6$ and $Li_{7+x}P_{1-y}Si_yS_6$ (x is -0.6 to 0.6, and y is 0.1 to 0.6). The argyrodite type crystal structure represented by this compositional formula is a cubic or orthorhombic, preferably a cubic crystal, and has peaks mainly appearing at positions of $2\theta$ = 15.5°, 18.0°, 25.0°, 30.0°, 31.4°, 45.3°, 47.0°, and 52.0° in X-ray diffractometry using CuK$\alpha$ line.

Examples of the compositional formula of argyrodite type crystal structure include a compositional formula of $Li_{7-x-2y}PS_{6-x-y}Cl_x$ (0.8 $\leq$ x $\leq$ 1.7, 0 < y $\leq$ -0.25x + 0.5). The argyrodite type crystal structure represented by this compositional formula is preferably a cubic crystal, and has peaks mainly appearing at positions of $2\theta$ = 15.5°, 18.0°, 25.0°, 30.0°, 31.4°, 45.3°, 47.0°, and 52.0° in X-ray diffractometry using CuK$\alpha$ line.

Further, examples of the compositional formulas of the argyrodite type crystal structure include a compositional formula of $Li_{7-x}PS_{6-x}Ha_x$ (Ha is Cl or Br, x is preferably 0.2 to 1.8). The argyrodite type crystal structure represented by this compositional formula is preferably a cubic crystal, and has peaks mainly appearing at positions of $2\theta$ = 15.5°, 18.0°, 25.0°, 30.0°, 31.4°, 45.3°, 47.0°, and 52.0° in X-ray diffractometry using CuK$\alpha$ line.

Note that these peak positions may be shifted back and forth within a range of $\pm$0.5°.

The shape of the crystalline sulfide solid electrolyte is not particularly limited, and examples thereof include a particle shape.

The average particle diameter ($D_{50}$) of the particle shaped crystalline sulfide solid electrolyte is, for example, 0.01 $\mu$m or more, further 0.03 $\mu$m or more, 0.05 $\mu$m or more, 0.1 $\mu$m or more, and the upper limit is 200.0 $\mu$m or less, further 100.0 $\mu$m or less, 10.0 $\mu$m or less, 1.0 $\mu$m or less, and 0.5 $\mu$m or less.

(Application)

The sulfide solid electrolyte obtained by the production method of the present embodiment has high ionic conductivity and excellent battery performance, and thus is suitably used for a battery.

The sulfide solid electrolyte obtained by the production method of the present embodiment may be used for a positive electrode layer, a negative electrode layer, or an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, and Cu, with Au or the like can be used.

Examples

Hereinafter, the present invention will be specifically described with reference to Examples, but the present invention is not limited to these Examples.

(Measurement of Powder XRD Diffraction)

Powder X-ray diffraction (XRD) measurement was performed as follows.

Each of the powders of the sulfide solid electrolyte obtained in Examples and Comparative Examples was filled in a groove having a diameter of 20 mm and a depth of 0.2 mm, and was leveled with glass to obtain a sample. This sample was sealed with a Kapton film for XRD and measured under the following conditions without being exposed to air.

Measuring device: D2 PHASER, manufactured by Bruker Co., Ltd.

Tube voltage: 30 kV
Tube current: 10 mA

X-ray wavelength: Cu-K$\alpha$ line (1.5418 Å)
Optical system: concentration method
Slit configuration: Using solar slit 4°, divergence slit 1mm, K$\beta$ filter (Ni plate)
Detector: semiconductor detector
Measurement range: 2$\theta$ = 10 to 60 deg
Step width, scan speed: 0.05 deg, 0.05 deg/second

(Measurement of Ionic Conductivity)

In the present examples, the ionic conductivity was measured as follows.

Circular pellets having diameters 10 mm (cross-sectional area S: 0.785 cm$^2$) and heights (L) of 0.1 to 0.3 cm were molded from the crystalline sulfide solid electrolytes obtained in Example and Comparative Examples, to obtain samples. Electrode terminals were taken from the top and bottom of the sample, and measured by an alternating current impedance method at 25°C (frequency range: 5 MHz to 0.5 Hz, amplitude: 10 mV), and a Cole-Cole plot was obtained. The real part Z' ($\Omega$) at the point where -Z" ($\Omega$) becomes minimum in the vicinity of the right end of an arc observed in a region on the high frequency side was defined as the bulk resistance R ($\Omega$) of the electrolyte, and the ionic conductivity $\sigma$ (S/cm) was calculated according to the following equations.

$$R = \rho(L/S)$$

$$\sigma = 1/\rho$$

(Example 1)

In a glove box under an argon atmosphere, 0.2546 g of lithium sulfide, 0.3241 g of diphosphorus pentasulfide, and 0.3554 g of elemental sulfur were mixed using a mortar and introduced into a 100-milliliter reaction vessel together with a stirrer (reaction vessel 1). Similarly, 0.1236 g of lithium chloride and 0.1520 g of lithium bromide were mixed in a mortar and introduced together with a stirrer into another 100-milliliter reaction vessel (reaction vessel 2). In a nitrogen atmosphere, 60 mL of a mixed solvent of ethanol (EtOH), tetrahydrofuran (THF) and acetonitrile (ACN) (the total amount of tetrahydrofuran (THF) and acetonitrile (ACN) relative to 1.0 part by volume of ethanol (EtOH) was 40.1 parts by volume, with ethanol : tetrahydrofuran : acetonitrile = 0.050 : 1 : 1 (volume ratio)) was added to the reaction vessel 1, and the mixture was stirred for 10 minutes with a magnetic stirrer. Next, the solution from the reaction vessel 1 was added to the reaction vessel 2, and further mixing was performed by stirring with a magnetic stirrer for 10 minutes.

Subsequently, using a vacuum pump and oil bath, heating was performed under reduced pressure at room temperature (20°C) for 1 hour (first heating-1) and under reduced pressure at 130°C for 1 hour (first heating-2). Furthermore, the powder obtained by the first heating was heated in an argon atmosphere at 250°C for 1 hour (second heating-1), and further heated in a nitrogen atmosphere at 430°C for 8 hours (second heating-2) to obtain a powder.

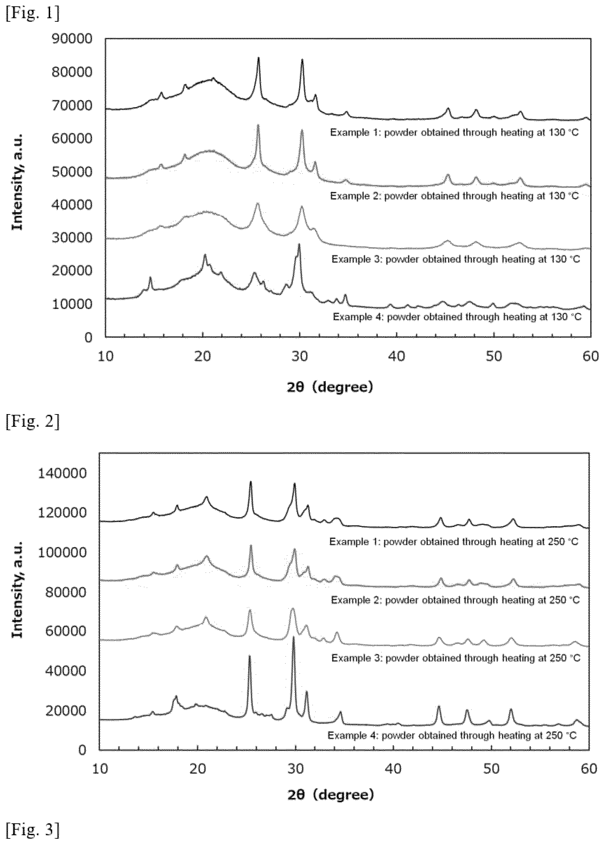

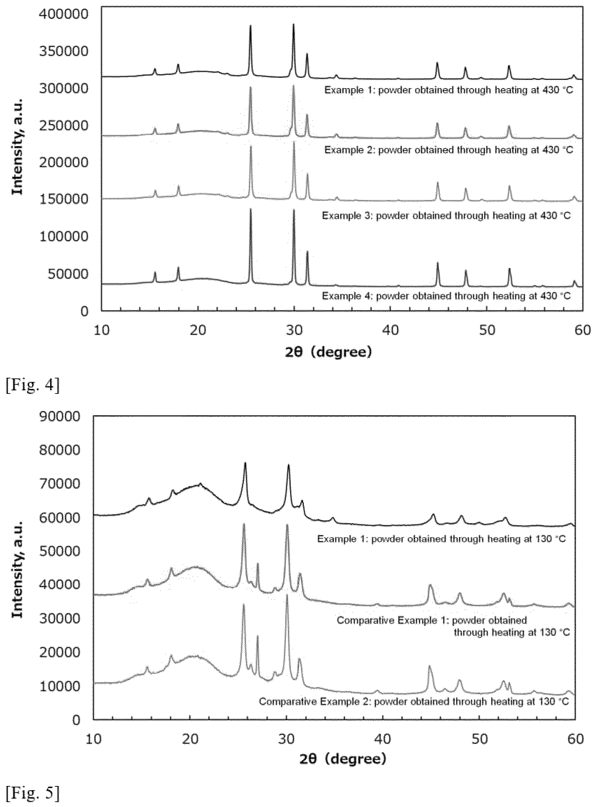

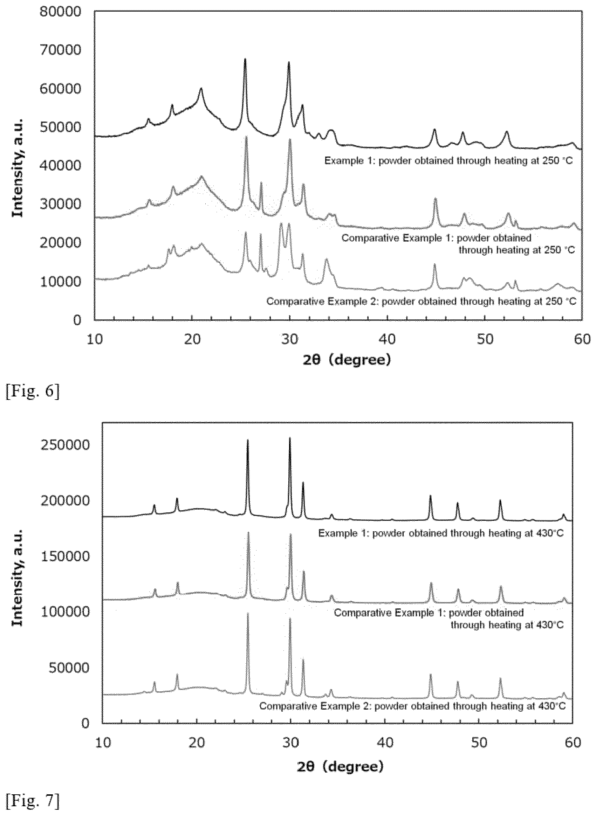

The powders obtained by the first heating at room temperature (20°C) and 130°C, and the second heating at 250°C and 430°C were subjected to powder XRD diffraction measurement. The X-ray diffraction spectrum of the powder obtained by heating at 130°C is shown in Figs. 1 and 4, the X-ray diffraction spectrum of the powder obtained by heating at 250°C is shown in Figs. 2 and 5, and the X-ray diffraction spectrum of the powder obtained by heating at 430°C is shown in Figs. 3 and 6.

In addition, the ionic conductivity of the powder obtained by heating at 430°C in Example 1 was measured and found to be 4.8 mS/cm.

(Examples 2, 3, 4, and 7)

Powders of Examples 2, 3, 4, and 7 were obtained in the same manner as in Example 1, except that the composition ratio and supply amount of the solvent in Example 1 were set to the conditions shown in Table 1A.

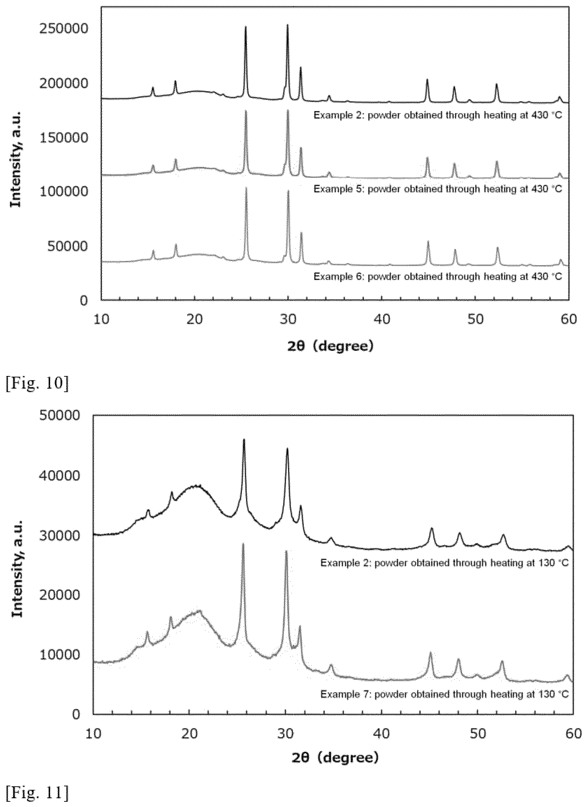

The powders obtained in Examples 2, 3, 4, and 7 were subjected to powder XRD diffraction measurement. The X-ray diffraction spectra of the powders obtained by heating at 130°C in Examples 2, 3, and 4 are shown in Fig. 1, the X-ray diffraction spectra of the powders obtained by heating at 250°C in Examples 2, 3, and 4 are shown in Fig. 2, the X-ray diffraction spectra of the powders obtained by heating at 430°C in Examples 2, 3, and 4 are shown in Fig. 3, and the X-ray diffraction spectra of the powders obtained by heating at 130°C, 250°C, and 430°C in Examples 2 and 7 are shown in Figs. 10, 11, and 12, respectively.

In addition, the ionic conductivity was measured for the powders obtained by heating at 430°C in Examples 2, 3, 4, and 7. The results are shown in Table 1A.

(Example 5)

Powder was obtained in the same manner as in Example 2, except that in Example 2, all the raw materials were mixed in a mortar at the same time and introduced into the reaction vessel, and mixed with the solvent by stirring for 10 minutes.

(Example 6)

Powder was obtained in the same manner as in Example 2, except that in Example 2, 0.1236 g of lithium chloride, 0.1520 g of lithium bromide, 0.2546 g of lithium sulfide, and 0.3554 g of sulfur were introduced into the reaction vessel, and mixed with the solvent by stirring for 10 minutes (reaction vessel 1), and then, the solution from the reaction vessel 1 was added to the reaction vessel 2, in which 0.3241 g of diphosphorus pentasulfide had been introduced, and mixed by stirring for 10 minutes.

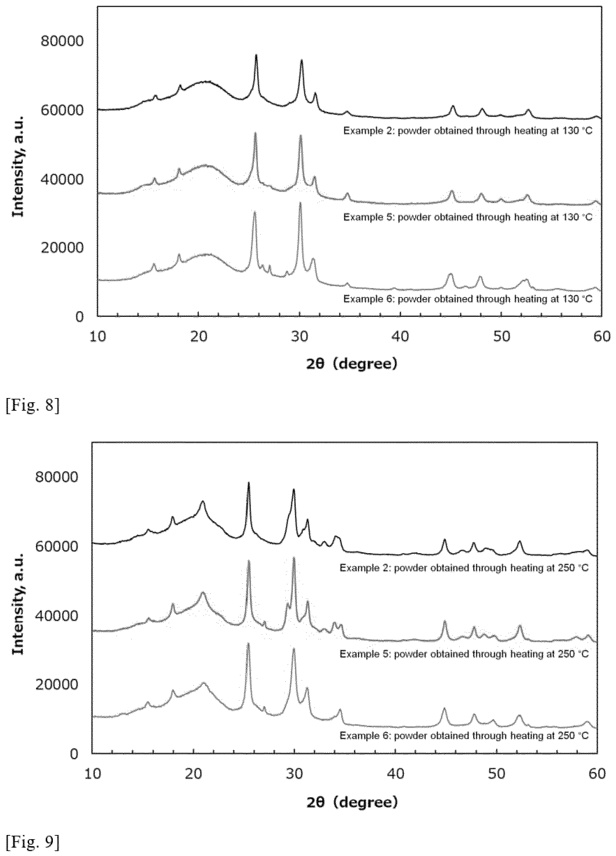

The X-ray diffraction spectra of the powders obtained by heating at 130°C in Examples 2, 5, and 6 are shown in Fig. 7, the X-ray diffraction spectra of the powders obtained by heating at 250°C in Examples 2, 5, and 6 are shown in Fig. 8, and the X-ray diffraction spectra of the powders obtained by heating at 430°C in Examples 2, 5, and 6 are shown in Fig. 9. In addition, the ionic conductivity was measured for the powders obtained by heating at 430°C in Examples 5 and 6. The results are shown in Table 1A.

(Comparative Examples 1 and 2)

Powders of Comparative Examples 1 and 2 were obtained in the same manner as in Example 1, except that in Example 1, the amount of elemental sulfur used was changed from 0.3544 g to 0.1269 g and 0.1777 g, respectively.

The X-ray diffraction spectra of the powders obtained by heating at 130°C in Comparative Examples 1 and 2 are shown in Fig. 4, the X-ray diffraction spectra of the powders obtained by heating at 250°C in Comparative Examples 1 and 2 are shown in Fig. 5, and the X-ray diffraction spectra of the powders obtained by heating at 430°C in Comparative Examples 1 and 2 are shown in Fig. 6. In addition, the ionic conductivity was measured for the powders obtained by heating at 430°C in Comparative Examples 1 and 2. The results are shown in Table 1A.

Table 1A

| | | Examples | | | | |
| --- | --- | --- | --- | --- | --- | --- |
| | | 1 | 2 | 3 | 4 | 5 |
| Lithium sulfide (Li$_2$S) | g | 0.2546 | 0.2546 | 0.2546 | 0.2546 | 0.2546 |
| Diphosphorus pentasulfide (P$_2$S$_5$) | g | 0.3241 | 0.3241 | 0.3241 | 0.3241 | 0.3241 |
| Lithium chloride (LiCl) | g | 0.1236 | 0.1236 | 0.1236 | 0.1236 | 0.1236 |
| Lithium bromide (LiBr) | g | 0.1520 | 0.1520 | 0.1520 | 0.1520 | 0.1520 |
| Elemental sulfur (S) | g | 0.3554 | 0.3554 | 0.3554 | 0.3554 | 0.3554 |
| Total amount | g | 1.2097 | 1.2097 | 1.2097 | 1.2097 | 1.2097 |
| EtOH | mL | 1.460 | 1.000 | 0.250 | 0.008 | 1.000 |
| THF | mL | 29.270 | 29.500 | 29.875 | 29.996 | 29.500 |
| ACN | mL | 29.270 | 29.500 | 29.875 | 2.9996 | 29.500 |
| Total amount | mL | 60.000 | 60.000 | 60.000 | 60.000 | 60.000 |
| Amount of elemental sulfur used (S/Li$_2$S) | mol/mol | 2.00 | 2.00 | 2.00 | 2.00 | 2.00 |
| S | mol | 0.011 | 0.011 | 0.011 | 0.011 | 0.011 |
| Li2S | mol | 0.0055 | 0.0055 | 0.0055 | 0.0055 | 0.0055 |
| Ethanol/Li2S | mol/mol | 4.512 | 3.091 | 0.773 | 0.024 | 3.091 |
| Ethanol | mol | 0.0250 | 0.0171 | 0.0043 | 0.00013 | 0.0171 |
| (THF+ACN)/EtOH | mL/mL | 40.1 | 59.0 | 239.0 | 7691.3 | 59.0 |
| Raw material/solvent | g/mL | 0.020 | 0.020 | 0.020 | 0.020 | 0.020 |
| Raw material supply method[*1] | - | A | A | A | A | B |

(continued)

|  |  | Examples | | | | |
|---|---|---|---|---|---|---|
|  |  | 1 | 2 | 3 | 4 | 5 |
| First heating heating temperature | °C | 20/130 | 20/130 | 20/130 | 20/130 | 20/130 |
| Second heating heating temperature | °C | 250/430 | 250/430 | 250/430 | 250/430 | 250/430 |
| Ionic conductivity | mS/cm | 4.8 | 5.3 | 6.7 | 8.4 | 4.3 |

Table 1A (continued)

|  |  | Examples | | Comparative Examples | |
|---|---|---|---|---|---|
|  |  | 6 | 7 | 1 | 2 |
| Lithium sulfide ($Li_2S$) | g | 0.2546 | 0.2546 | 0.2546 | 0.2546 |
| Diphosphorus pentasulfide ($P_2S_5$) | g | 0.3241 | 0.3241 | 0.3241 | 0.3241 |
| Lithium chloride (LiCl) | g | 0.1236 | 0.1236 | 0.1236 | 0.1236 |
| Lithium bromide (LiBr) | g | 0.1520 | 0.1520 | 0.1520 | 0.1520 |
| Elemental sulfur (S) | g | 0.3554 | 0.3554 | 0.1269 | 0.1777 |
| Total amount | g | 1.2097 | 1.2097 | 0.9812 | 1.0320 |
| EtOH | mL | 1.000 | 1.000 | 1.460 | 1.460 |
| THF | mL | 29.500 | 7.000 | 29.270 | 29.270 |
| ACN | mL | 29.500 | 7.000 | 29.270 | 29.270 |
| Total amount | mL | 60.000 | 15.000 | 60.000 | 60.000 |
| Amount of elemental sulfur used ($S/Li_2S$) | mol/mol | 2.00 | 2.00 | 0.71 | 1.00 |
| S | mol | 0.011 | 0.011 | 0.004 | 0.006 |
| Li2S | mol | 0.0055 | 0.0055 | 0.0055 | 0.0055 |
| Ethanol/Li2S | mol/mol | 3.091 | 3.091 | 4.512 | 4.512 |
| Ethanol | mol | 0.0171 | 0.0171 | 0.025 | 0.025 |
| (THF+ACN)/EtOH | mL/mL | 59.0 | 14.0 | 40.1 | 40.1 |
| Raw material/solvent | g/mL | 0.020 | 0.081 | 0.016 | 0.017 |
| Raw material supply method[*1] | - | C | A | A | A |
| First heating heating temperature | °C | 20/130 | 20/130 | 20/130 | 20/130 |
| Second heating heating temperature | °C | 250/430 | 250/430 | 250/430 | 250/430 |
| Ionic conductivity | mS/cm | 4.3 | 4.5 | 3.5 | 3.6 |
| *1, Raw material supply methods A to C are as follows.<br>A: Lithium sulfide, diphosphorus pentasulfide, and elemental sulfur were mixed, and then lithium chloride and lithium bromide were mixed.<br>B: Lithium sulfide, diphosphorus pentasulfide, elemental sulfur, lithium chloride and lithium bromide were mixed at the same time.<br>C: Lithium chloride, lithium bromide, lithium sulfide, and elemental sulfur were mixed, and then diphosphorus pentasulfide was mixed. | | | | | |

(Examples 8 to 11)

Powder of Example 8 was obtained in the same manner as in Example 1, except that in Example 1, the amount of sulfur atoms used, the composition ratio and the supply amount of the solvent were set to the conditions shown in Table 1B. Further, powders of Examples 9 to 11 were obtained in the same manner as in Example 1, except that the composition ratio and supply amount of the solvent in Example 1 were set to the conditions shown in Table 1B.

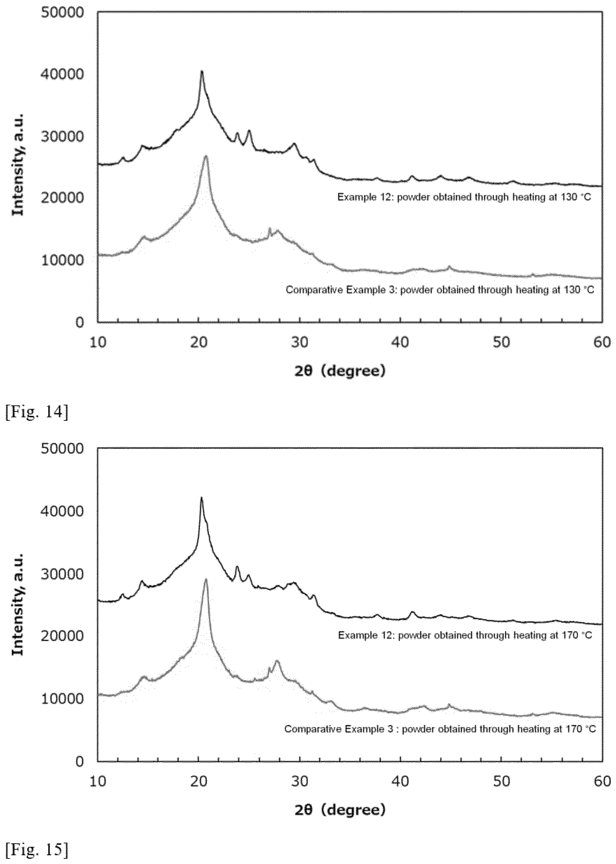

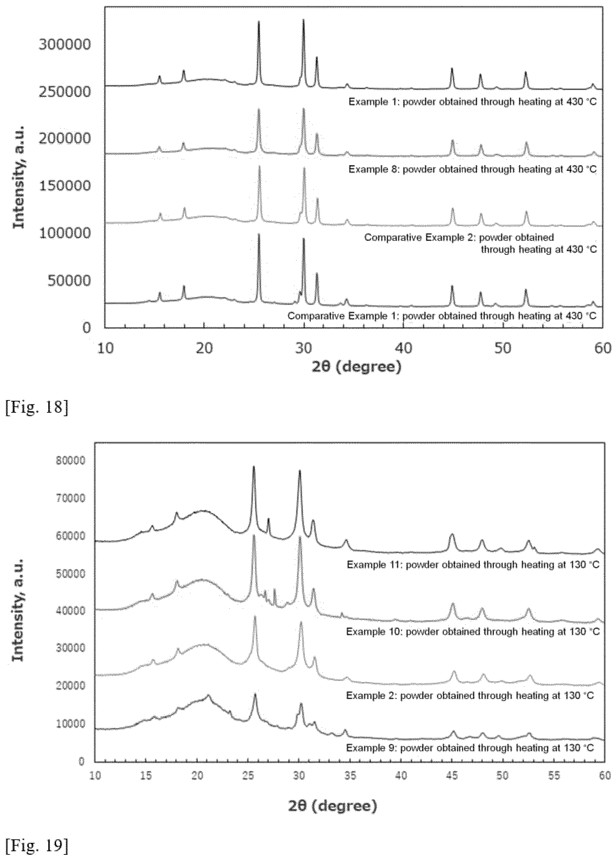

The powders obtained in Examples 8 to 11 were subjected to powder XRD diffraction measurement. The X-ray diffraction spectra of the powders obtained by heating at 130°C, 250°C, and 430°C in Example 8 are shown in Figs. 15 to 17 (the X-ray diffraction spectra in these figures also show those of Example 1, Comparative Examples 1 and 2). The X-ray diffraction spectra of the powders obtained by heating at 130°C, 250°C, and 430°C in Examples 9 to 11 are shown in Figs. 18 to 20 (the X-ray diffraction spectra in these figures also show those of Example 2). In addition, the ionic conductivity was measured for the powders obtained by heating at 430°C in Examples 8 to 11. The results are shown in Table 1B.

Table 1B

| | | | Examples | | | |
|---|---|---|---|---|---|---|
| | | | 8 | 9 | 10 | 11 |
| Lithium sulfide (Li$_2$S) | | g | 0.2546 | 0.2546 | 0.2546 | 0.2546 |
| Diphosphorus pentasulfide (P$_2$S$_5$) | | g | 0.3241 | 0.3241 | 0.3241 | 0.3241 |
| Lithium chloride (LiCl) | | g | 0.1236 | 0.1236 | 0.1236 | 0.1236 |
| Lithium bromide (LiBr) | | g | 0.1520 | 0.1520 | 0.1520 | 0.1520 |
| Elemental sulfur (S) | | g | 0.2666 | 0.3554 | 0.3554 | 0.3554 |
| Total amount | | g | 1.1209 | 1.2097 | 1.2097 | 1.2097 |
| EtOH | | mL | 1 .460 | 1.000 | 1.000 | 1.000 |
| THF | | mL | 29.27 | 59.00 | 14.75 | 0.00 |
| ACN | | mL | 29.27 | 0.00 | 44.25 | 59.00 |
| Total amount | | mL | 60.00 | 60.00 | 60.00 | 60.00 |
| Amount of elemental sulfur used (S/Li$_2$S) | | mol/mol | 1.50 | 2.00 | 2.00 | 2.00 |
| | S | mol | 0.008 | 0.011 | 0.011 | 0.011 |
| | Li2S | mol | 0.0055 | 0.0055 | 0.0055 | 0.0055 |
| Ethanol/Li2S | | mol/mol | 4.512 | 3.091 | 3.091 | 3.091 |
| | Ethanol | mol | 0.0250 | 0.0171 | 0.0171 | 0.0171 |
| (THF+ACN)/EtOH | | mL/mL | 40.1 | 59.0 | 59.0 | 59.0 |
| Raw material/solvent | | g/mL | 0.019 | 0.020 | 0.020 | 0.020 |
| Raw material supply | | - | A | A | A | A |
| First heating heating temperature | | °C | 20/130 | 20/130 | 201/130 | 20/130 |
| Second heating heating temperature | | °C | 250/430 | 250/430 | 250/430 | 250/430 |
| Ionic conductivity | | mS/cm | 3.8 | 5.0 | 5.0 | 4.3 |

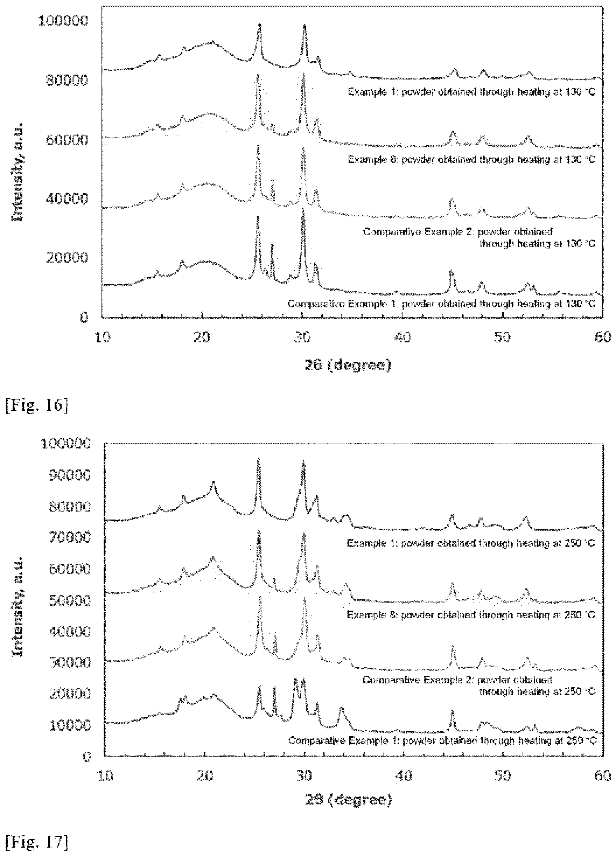

As shown in Figs. 2, 3, 5, 6, 8, 9, 11, and 12, the powders obtained by heating at 250°C and 430°C in Examples 1 to 7 had peaks at 2θ = 15.5°, 18.0°, 25.0°, 30.0°, 31.4°, 45.3°, 47.0°, and 52.0°, and were therefore confirmed to be crystalline sulfide solid electrolytes having an argyrodite type crystal structure. In addition, as shown in Figs. 16, 17, 19 and 20, the powders obtained by heating at 250°C and 430°C in Examples 8 to 11 were also confirmed to be crystalline sulfide solid electrolytes having an argyrodite type crystal structure, as in Examples 1 to 7.

As shown in Figs. 1, 4, 7, and 10, and Figs. 15 and 18, the powders obtained by heating at 130°C in Examples 1 to 7 and the powders obtained by heating at 130°C in Examples 8 to 11 show some impurity peaks, but the peaks due to the argyrodite type crystal structure were confirmed, and it was confirmed that the powders were crystalline sulfide solid electrolytes having an argyrodite type crystal structure. In Examples 5 and 6, a peak believed to be due to lithium sulfide was observed at 2θ = 27.0°, and in Examples 1, 2, 5, 6, and 7, a peak believed to be due to lithium chloride was observed at 2θ = 34.9°. It was also found that the peak intensity due to the argyrodite type crystal structure was weaker than the peak intensity of the crystalline sulfide solid electrolyte after heating at 250°C and 430°C. Comparing Figs. 3, 6, 9, and 12 with Figs. 1, 4, 7, and 10, it was confirmed that by performing heating at a higher heating temperature (heating corresponding to the second heating), peaks due to raw materials such as lithium sulfide and lithium chloride are no longer observed and the crystallinity is improved.

As shown in Fig. 3, comparing to the powders in Examples 1 and 2, the powders obtained by heating at 430°C in Examples 3 and 4 have smaller peak intensities at $2\theta = 22.1°$ and $23.0°$ derived from $P_2O_5$ and have larger peak intensities due to the argyrodite type crystal structure. It is believed that the small amount of alcohol solvent (ethanol) in the solvent suppressed the generation of oxides derived from oxygen in ethanol, improving the crystallinity of the crystalline sulfide solid electrolyte having an argyrodite type crystal structure. The ionic conductivities of the powders of Examples 1, 2, 3, and 4 were 4.8 mS/cm, 5.3 mS/cm, 6.7 mS/cm, and 8.4 mS/cm, respectively. The smaller the amount of ethanol in the solvent, and the smaller the amount of alcohol solvent (ethanol) used relative to lithium sulfide, the higher the conductivity.

As shown in Fig. 7, in the powders obtained by heating at 130°C in Examples 2, 5, and 6, a peak believed to be due to lithium sulfide was confirmed at $2\theta = 27.0°$ only in Examples 5 and 6. Accordingly, it was found that although it is possible to obtain a crystalline sulfide solid electrolyte having an argyrodite type crystal structure regardless of the raw material supply method, the supply method A allows the reaction to proceed most efficiently. As shown in Fig. 9, in the powders obtained by heating at 430°C in Examples 5 and 6, which were supplied by methods other than the supply method A, the peak due to lithium sulfide disappeared as the reaction proceeded with heating. However, for example, the ionic conductivities of the powders of Examples 2, 5, and 6 were 5.3 mS/cm, 4.3 mS/cm, and 4.3 mS/cm, respectively, and it was found that the highest ionic conductivity was obtained with the supply method A.

From the above results, it was confirmed that, although a sulfide solid electrolyte with sufficiently high ionic conductivity can be obtained by any of the supply methods, in order to obtain a higher ionic conductivity, it is more effective to supply the raw materials in separate raw material groups 1 and 2, in particular, to supply the raw materials in separate raw material group 1 including raw materials containing at least one atom selected from a lithium atom, a phosphorus atom, and a sulfur atom, elemental sulfur, and lithium sulfide, and in separate raw material group 2 including raw materials containing a halogen atom, rather than mixing the raw materials all at once.

As shown in Figs. 4 and 5, similar to the powder of Example 1, it is observed that the powders obtained by heating at 130°C and 250°C in Comparative Examples 1 and 2 have peaks due to the argyrodite type crystal structure, but a large peak due to lithium sulfide at $2\theta = 27.0°$ is also observed, and it was found that the reaction did not proceed efficiently. As shown in Fig. 6, in the powders obtained by heating at 430°C in Comparative Examples 1 and 2, the peak due to lithium sulfide disappeared as the reaction proceeded with heating. However, for example, the ionic conductivity of the powders of Example 1, Comparative Examples 1 and 2 was 4.8 mS/cm, 3.5 mS/cm and 3.6 mS/cm, respectively, which was lower than that of the powder of Example 1. In addition, in Example 8, 1.5 moles of sulfur atoms were used relative to 1.0 mole of lithium sulfide, and the ionic conductivity was 3.8 mS/cm. This shows that, as in the Examples where 2.0 moles were used, it was confirmed that the powder of Example 8 had a higher ionic conductivity than that of the powder of the Comparative Examples. As described above, the powder of Example 8 has a peak due to the argyrodite type crystal structure as in Example 1, and is considered to have high ionic conductivity due to the use of more than 1.0 mole of elemental sulfur relative to 1.0 mole of lithium sulfide as the amount of sulfur atoms used.

From the above results, it was confirmed that by using an excess amount of elemental sulfur and generating sulfur radicals via lithium polysulfides, a soluble polysulfide (i.e., electrolyte precursor) is generated by the reaction among all raw materials, and as a result, a sulfide solid electrolyte with improved ionic conductivity is obtained. On the other hand, it was confirmed in Comparative Examples 1 and 2, although the peak due to lithium sulfide disappeared, the reaction among all the raw materials did not proceed well, and thus the structure of the sulfide solid electrolyte was not sufficiently formed, and high ionic conductivity was not obtained.

As shown in Figs. 10, 11 and 12, there was no significant difference between the powders obtained by heating at 130°C, 250°C and 430°C in Examples 2 and 7. This shows that, when the amount of ethanol was maintained, changing the amount of the solvent used did not have a significant effect on the resulting powder. The ionic conductivity of the powders of Examples 2 and 7 was 5.3 mS/cm and 4.5 mS/cm, respectively, and similar values were obtained. From the above results, it was found that among alcohol solvents, ether solvents, and nitrile solvents, which are solvents having heteroatoms such as oxygen atoms and nitrogen atoms, maintaining the amount of alcohol solvents is particularly effective.

According to Examples 9 and 11, it was confirmed that it is possible to obtain a crystalline sulfide solid electrolyte having an argyrodite type crystal structure without using an alcohol solvent, an ether solvent, and a nitrile solvent in combination as in Examples 1 to 8 as a solvent for mixing the raw material-containing substance.

Furthermore, according to Examples 9 to 11, when an alcohol solvent is used as the solvent, the amount of the alcohol solvent can be set widely, and when an ether solvent and a nitrile solvent are used, the ratio of these solvents is not limited to one ratio and can be set widely.

(Example 12)

In a glove box under a nitrogen atmosphere, 0.2590 g of lithium sulfide, 0.4177 g of diphosphorus pentasulfide, and 0.3616 g of elemental sulfur were mixed using a mortar and introduced into a 100-milliliter reaction vessel together with a stirrer (reaction vessel 1). Similarly, 0.1776 g of lithium iodide was weighed out and introduced together with a stirrer into another 100-milliliter reaction vessel (reaction vessel 2). In a nitrogen atmosphere, 32.62 mL of a mixed solvent of ethanol (EtOH), tetrahydrofuran (THF) and acetonitrile (ACN) (the total amount of tetrahydrofuran (THF) and acetonitrile (ACN) relative to 1.0 part by volume of ethanol (EtOH) was 512.7 parts by volume, with ethanol : tetrahydrofuran : acetonitrile = 0.0039 : 1 : 1 (volume ratio)) was added to the reaction vessel 1, and the mixture was stirred for 10 minutes with a magnetic stirrer. Next, the solution from the reaction vessel 1 was added to the reaction vessel 2, and further mixing was performed by stirring with a magnetic stirrer for 10 minutes.

Subsequently, using a vacuum pump and oil bath, heating was performed under reduced pressure at room temperature (20°C) for 1 hour (first heating-1) and under reduced pressure at 130°C for 1 hour (first heating-2). Furthermore, the powder obtained by the first heating was heated under reduced pressure at 170°C for 2 hours (second heating-1) to obtain a powder.

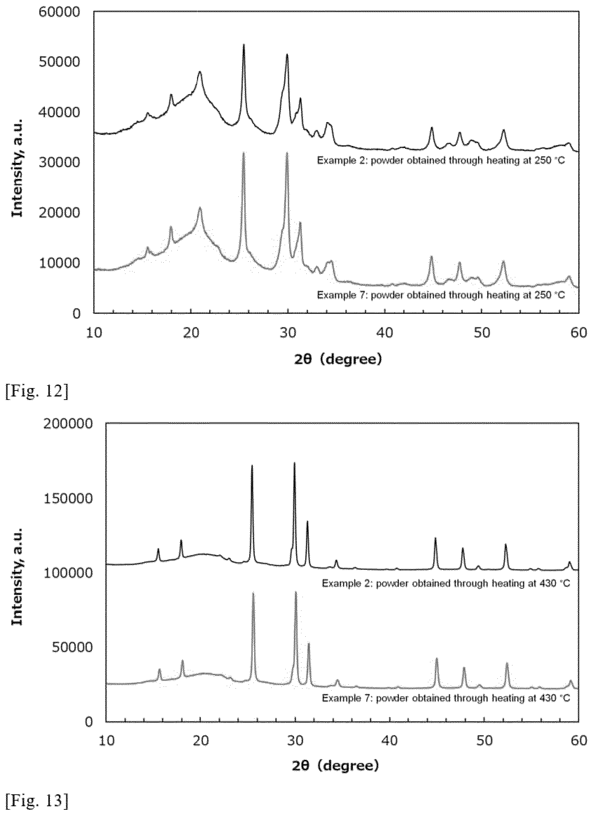

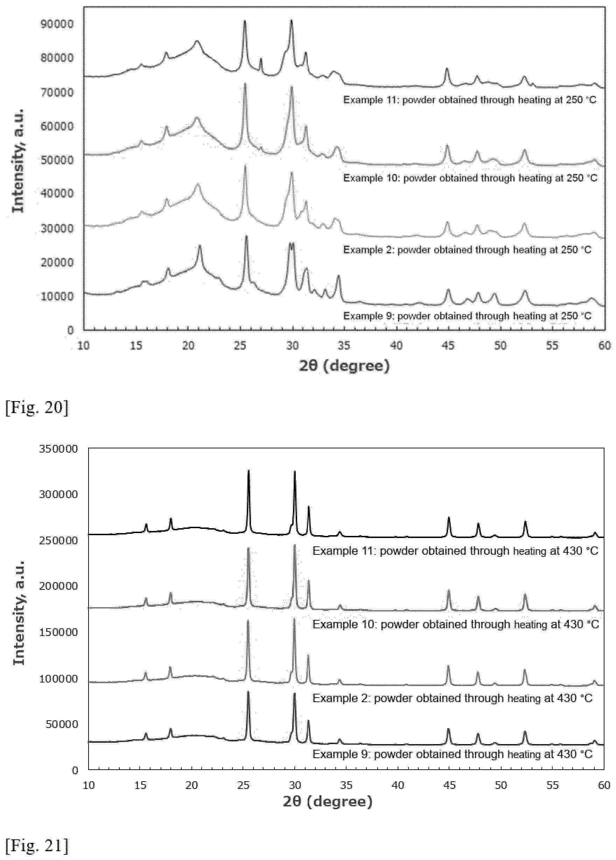

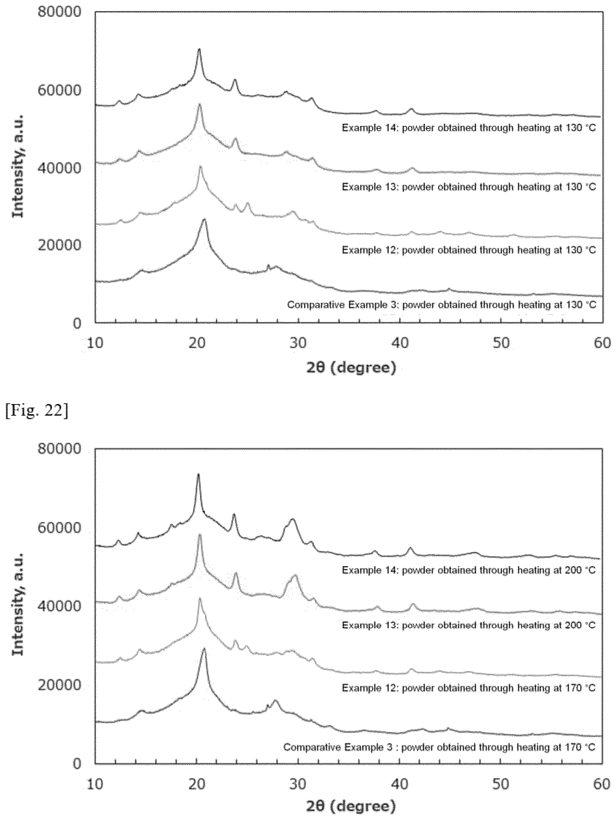

The powders obtained by the first heating at 130°C and the second heating at 170°C were subjected to powder XRD diffraction measurement. The X-ray diffraction spectrum of the powder obtained by heating at 130°C is shown in Figs. 13 and 21, and the X-ray diffraction spectrum of the powder obtained by heating at 170°C is shown in Figs. 14 and 22.

(Example 13)

In a glove box under a nitrogen atmosphere, 0.6294 g of lithium sulfide, 1.0149 g of diphosphorus pentasulfide, 0.6589 g of elemental sulfur, 0.1400 g of lithium bromide, and 0.2157 g of lithium iodide were mixed using a mortar and introduced into a 100-milliliter reaction vessel together with a stirrer, 79.29 mL of a mixed solvent of ethanol (EtOH) and tetrahydrofuran (THF) (the amount of tetrahydrofuran (THF) and acetonitrile (ACN) used relative to 1.0 part by volume of ethanol (EtOH) was 510.5 parts by volume (no acetonitrile (ACN) was used), with ethanol : tetrahydrofuran : acetonitrile = 0.00196 : 1 : 0 (volume ratio)) was added, and the mixture was stirred for 10 minutes with a magnetic stirrer.

Subsequently, using a vacuum pump and oil bath, heating was performed under reduced pressure at room temperature (20°C) for 1 hour (first heating-1) and under reduced pressure at 130°C for 1 hour (first heating-2). Furthermore, the powder obtained by the first heating was heated under reduced pressure at 200°C for 2 hours (second heating-1) to obtain a powder.

The powders obtained by the first heating at 130°C and the second heating at 200°C were subjected to powder XRD diffraction measurement. The X-ray diffraction spectrum of the powder obtained by heating at 130°C is shown in Fig. 21, and the X-ray diffraction spectrum of the powder obtained by heating at 200°C is shown in Fig. 22 (the X-ray diffraction spectra in these figures also show those of Example 12 and Comparative Example 3). In addition, the ionic conductivity was measured for the powder obtained by heating at 200°C in Example 13. The results are shown in Table 2.

(Example 14)

Powder was obtained in the same manner as in Example 13, except that the amount of the solvent used in Example 13 was set to the amount shown in Table 2.

The powders obtained by the first heating at 130°C and the second heating at 200°C were subjected to powder XRD diffraction measurement. The X-ray diffraction spectrum of the powder obtained by heating at 130°C is shown in Fig. 21, and the X-ray diffraction spectrum of the powder obtained by heating at 200°C is shown in Fig. 22 (the X-ray diffraction spectra in these figures also show those of Example 12 and Comparative Example 3). In addition, the ionic conductivity was measured for the powder obtained by heating at 200°C in Example 14. The results are shown in Table 2.

(Comparative Example 3)

Powder of Comparative Example 3 was obtained in the same manner as in Example 12, except that in Example 12, the amount of elemental sulfur used was changed from 0.3616 g to 0.1808 g. The X-ray diffraction spectrum of the powder obtained by heating at 130°C in Comparative Example 3 is shown in Figs. 13 and 21, and the X-ray diffraction spectrum of the powder obtained by heating at 170°C is shown in Figs. 14 and 22.

In addition, the raw materials and solvents, as well as the amount of elemental sulfur used in Example 12 and Comparative Example 3 are summarized in Table 2 below.

Table 2

|  |  | Examples | | | Comparative Examples |
|---|---|---|---|---|---|
|  |  | 12 | 13 | 14 | 3 |
| Lithium sulfide ($Li_2S$) | g | 0.2590 | 0.6294 | 0.6294 | 0.2590 |
| Diphosphorus pentasulfide ($P_2S_5$) | g | 0.4177 | 1.0149 | 1.0149 | 0.4177 |
| Lithium chloride (LiCl) | g | 0.1776 | 0.2157 | 0.2157 | 0.1776 |

(continued)

| | | Examples | | | Comparative Examples |
|---|---|---|---|---|---|
| | | 12 | 13 | 14 | 3 |
| Lithium bromide (LiBr) | g | 0.0000 | 0.1400 | 0.1400 | 0.0000 |
| Elemental sulfur (S) | g | 0.3616 | 0.6589 | 0.6589 | 0.1808 |
| Total amount | g | 1.2159 | 2.6589 | 2.6589 | 1.0351 |
| EtOH | mL | 0.064 | 0.155 | 0.077 | 0.064 |
| THF | mL | 16.278 | 79.130 | 79.200 | 16.278 |
| ACN | mL | 16.278 | 0.000 | 0.000 | 16.278 |
| Total amount | mL | 32.62 | 79.29 | 79.28 | 32.620 |
| Amount of elemental sulfur used (S/Li$_2$S) | mol/mol | 2.00 | 1.50 | 1.50 | 1.00 |
| S | mol | 0.011 | 0.021 | 0.021 | 0.006 |
| Li2S | mol | 0.0056 | 0.0137 | 0.0137 | 0.0056 |
| Ethanol/Li2S | mol/mol | 0.193 | 0.194 | 0.096 | 0.193 |
| Ethanol | mol | 0.0011 | 0.0027 | 0.0013 | 0.001 |
| (THF+ ACN)/EtOH | mL/mL | 512.7 | 510.5 | 1028.6 | 512.7 |
| Raw material/solvent | g/mL | 0.037 | 0.034 | 0.034 | 0.032 |
| Raw material supply method[*1] | - | D | E | E | D |
| First heating heating temperature | °C | 20/130 | 20/130 | 20/130 | 20/130 |
| Second heating heating temperature | °C | 170 | 200 | 200 | 170 |
| Ionic conductivity | mS/cm | 0.5 | 1.2 | 1.3 | - |

*1, Raw material supply methods D and E are as follows.
D: Lithium sulfide, diphosphorus pentasulfide, and elemental sulfur were mixed, and then lithium iodide was mixed.
E: Lithium sulfide, diphosphorus pentasulfide, elemental sulfur, lithium iodide and lithium bromide were mixed at the same time.

As shown in Figs. 13 and 14 (and Figs. 21 and 22), the powder obtained in Example 12 had peaks at $2\theta = 20.3°$ and 23.9° derived from the thio-LISICON Region II type crystal structure, and was therefore confirmed to be a sulfide solid electrolyte having a thio-LISICON Region II type crystal structure. A sulfide solid electrolyte having a thio-LISICON Region II type crystal structure is known as a sulfide solid electrolyte having high ionic conductivity like the sulfide solid electrolyte having an argyrodite type crystal structure, and the powder obtained in Example 12 is considered to be a sulfide solid electrolyte with high ionic conductivity.

As shown in Figs. 13 and 14 (and Figs. 21 and 22), the powder obtained in Comparative Example 3 did not show peaks at 20 = 20.3° and 23.9° derived from the thio-LISICON Region II type crystal structure, and peaks thought to be derived from $Li_7P_2S_8I$ or $Li_4PS_4I$ were observed at 20 = 20.8° and 27.9°. Further, a peak due to lithium sulfide was also observed at $2\theta = 27.0°$, and it was found that the reaction did not proceed efficiently.

Examples 13 and 14 are examples in which an alcohol solvent and an ether solvent are used as the solvent. As shown in Figs. 21 and 22, the powders obtained in these Examples have peaks at 20 = 20.3° and 23.9° derived from the thio-LISICON Region II type crystal structure, similar to the powder obtained in Example 12, and were therefore confirmed to be sulfide solid electrolytes having a thio-LISICON Region II type crystal structure and having high ionic conductivity.

Industrial Applicability

According to the method for producing a sulfide solid electrolyte of the present embodiment, a sulfide solid electrolyte having improved ionic conductivity can be efficiently provided. The sulfide solid electrolyte obtained by the production method of the present embodiment is suitably used for batteries, in particular, batteries used for information-related devices such as personal computers, video cameras, and mobile phones, and communication devices.

**Claims**

1. A method for producing a sulfide solid electrolyte, comprising

   mixing, in a solvent, a raw material-containing substance that contains a plurality of raw materials each containing at least one atom selected from a lithium atom, a phosphorus atom, a sulfur atom, and a halogen atom, and subsequently heating the mixture, wherein
   the raw material-containing substance contains elemental sulfur and lithium sulfide, and
   the elemental sulfur is used in an amount of more than 1.0 mole based on 1.0 mole of the lithium sulfide.

2. The method for producing a sulfide solid electrolyte according to claim 1, wherein the halogen atom is at least one atom selected from a chlorine atom, a bromine atom, and an iodine atom.

3. The method for producing a sulfide solid electrolyte according to claim 1 or 2, wherein the solvent is an organic solvent containing at least one atom selected from an oxygen atom and a nitrogen atom.

4. The method for producing a sulfide solid electrolyte according to any one of claims 1 to 3, wherein the solvent is at least one organic solvent selected from an alcohol solvent, an ether solvent, and a nitrile solvent.

5. The method for producing a sulfide solid electrolyte according to any one of claims 1 to 4, wherein the solvent includes an alcohol solvent.

6. The method for producing a sulfide solid electrolyte according to any one of claims 1 to 5, wherein the solvent includes an alcohol solvent and at least one organic solvent selected from an ether solvent and a nitrile solvent.

7. The method for producing a sulfide solid electrolyte according to any one of claims 1 to 6, wherein the solvent is an organic solvent including an alcohol solvent, an ether solvent, and a nitrile solvent.

8. The method for producing a sulfide solid electrolyte according to any one of claims 5 to 7, wherein the alcohol solvent is used in an amount of 0.005 moles or more and 20.0 moles or less based on 1.0 mole of the lithium sulfide,

9. The method for producing a sulfide solid electrolyte according to any one of claims 6 to 8, wherein a total amount of the ether solvent and the nitrile solvent used is 2.0 parts by volume or more and 10,000.0 parts by volume or less based on 1.0 part by volume of the alcohol solvent used.

10. The method for producing a sulfide solid electrolyte according to any one of claims 1 to 9, wherein a heating temperature in the heating is 20°C or higher and 500°C or lower.

11. The method for producing a sulfide solid electrolyte according to any one of claims 1 to 10, wherein the heating is performed by a first heating with a heating temperature of 20°C or higher and lower than 150°C, and a second heating with a heating temperature of 150°C or higher and 500°C or lower.

12. The method for producing a sulfide solid electrolyte according to any one of claims 1 to 11, wherein, in the mixing, the raw materials are mixed simultaneously.

13. The method for producing a sulfide solid electrolyte according to any one of claims 1 to 11, wherein, in the mixing, a raw material group 1 including a part of raw materials selected from the raw materials is mixed, and then a raw material group 2 including raw materials other than the part of the raw materials is mixed.

14. The method for producing a sulfide solid electrolyte according to claim 13, wherein the raw material group 1 includes elemental sulfur.

15. The method for producing a sulfide solid electrolyte according to claim 13 or 14, wherein the raw material group 1 includes a raw material containing at least one atom selected from a lithium atom, a phosphorus atom, and a sulfur atom, elemental sulfur, and lithium sulfide, and the raw material group 2 includes a raw material containing a halogen atom.

16. The method for producing a sulfide solid electrolyte according to any one of claims 1 to 15, wherein a crystalline sulfide solid electrolyte having an argyrodite type crystal structure or a thio-LISICON Region II type crystal structure is produced.

EP 4 553 860 A1

[Fig. 1]

X-ray diffraction patterns; x-axis: 2θ (degree); y-axis: Intensity, a.u.
Example 1: powder obtained through heating at 130 °C
Example 2: powder obtained through heating at 130 °C
Example 3: powder obtained through heating at 130 °C
Example 4: powder obtained through heating at 130 °C

[Fig. 2]

X-ray diffraction patterns; x-axis: 2θ (degree); y-axis: Intensity, a.u.
Example 1: powder obtained through heating at 250 °C
Example 2: powder obtained through heating at 250 °C
Example 3: powder obtained through heating at 250 °C
Example 4: powder obtained through heating at 250 °C

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

[Fig. 20]

[Fig. 21]

[Fig. 22]

<div align="center">**INTERNATIONAL SEARCH REPORT**</div>

| International application No. |
|---|
| **PCT/JP2023/025216** |

**A. CLASSIFICATION OF SUBJECT MATTER**

*H01B 13/00*(2006.01)i; *C01B 25/14*(2006.01)i; *H01M 10/0562*(2010.01)i
FI: H01B13/00 Z; H01M10/0562; C01B25/14

According to International Patent Classification (IPC) or to both national classification and IPC

**B. FIELDS SEARCHED**

Minimum documentation searched (classification system followed by classification symbols)

H01B13/00; C01B25/14; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2003/059810 A1 (IDEMITSU PETROCHEMICAL CO., LTD.) 24 July 2003 (2003-07-24)<br>p. 4, line 24 to p. 9, line 6 | 1-16 |
| A | WO 2018/225526 A1 (IDEMITSU KOSAN CO., LTD.) 13 December 2018 (2018-12-13)<br>paragraphs [0012]-[0094] | 1-16 |
| A | WO 2005/119706 A1 (IDEMITSU KOSAN CO., LTD., NATIONAL INSTITUTE FOR MATERIALS SCIENCE) 15 December 2005 (2005-12-15)<br>paragraphs [0010]-[0021] | 1-16 |
| A | JP 2018-45997 A (IDEMITSU KOSAN CO., LTD.) 22 March 2018 (2018-03-22)<br>paragraphs [0011]-[0078] | 1-16 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/025216**

| Patent document cited in search report | | | Publication date (day/month/year) | Patent family member(s) | | | Publication date (day/month/year) |
|---|---|---|---|---|---|---|---|
| WO | 2003/059810 | A1 | 24 July 2003 | JP | 2003-208919 | A | |
| | | | | US | 2005/0107239 | A1 | |
| | | | | paragraphs [0015]-[0065] | | | |
| | | | | EP | 1466865 | A1 | |
| WO | 2018/225526 | A1 | 13 December 2018 | US | 2021/0075056 | A1 | |
| | | | | paragraphs [0027]-[0239] | | | |
| | | | | EP | 3637442 | A1 | |
| | | | | CN | 110709950 | A | |
| WO | 2005/119706 | A1 | 15 December 2005 | US | 2007/0248888 | A1 | |
| | | | | paragraphs [0061]-[0147] | | | |
| | | | | CN | 1965378 | A | |
| JP | 2018-45997 | A | 22 March 2018 | JP | 2022-3641 | A | |
| | | | | US | 2018/0069262 | A1 | |
| | | | | paragraphs [0023]-[0116] | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014191899 A
- WO 2014192309 A
- WO 2018054709 A
- WO 2020105737 A
- WO 2021230189 A
- JP 2013016423 A

### Non-patent literature cited in the description

- *J. Mater. Chem. A*, 2019, vol. 7, 558-566
- The 62nd Battery Symposium in Japan proceedings. *All-solid Battery/Sulfide Electrolyte*, 29 November 2021, vol. 3, 01
- *Adv. Energy Sustainability Res.*, 2022, vol. 3, 2200019
- **KANNO et al.** *Journal of The Electrochemical Society*, 2001, vol. 148 (7), A742-746
- *Solid State Ionics*, 2006, vol. 177, 2721-2725